# EUROPEAN PATENT APPLICATION

(11) **EP 4 228 298 A1**
(43) Date of publication of application: **16.08.2023**
(21) Application number: 21897157.0
(22) Date of filing: 26.11.2021
(51) Int. Cl.: H04W 4/80

(54) **WLAN COMMUNICATION METHOD AND RELATED APPARATUS**

(30) Priority: 27.11.2020 CN 202011357175; 02.03.2021 CN 202110230414
(71) Applicant: Huawei Technologies Co., Ltd., Shenzhen, Guangdong 518129 (CN)
(72) Inventor: WANG, Tongbo, Shenzhen, Guangdong 518129 (CN); ZHANG, Jinming, Shenzhen, Guangdong 518129 (CN); YU, Quan, Shenzhen, Guangdong 518129 (CN)
(74) Representative: Thun, Clemens
(86) International application number: PCT/CN2021/133715
(87) International publication number: WO 2022/111657

(57) **Abstract**

This application discloses a WLAN communication method and a related apparatus. In the method, a design of a radio frequency path in an electronic device is modified, and a radio frequency path in a 5 GHz high frequency band and a radio frequency path in a 5 GHz low frequency band are configured in a WLAN communication module of the electronic device by using a feature of a wide Wi-Fi 5 GHz frequency band. When the electronic device needs to establish two WLAN connections, the electronic device may transmit and receive data through the radio frequency path in the 5 GHz high frequency band in one WLAN connection, and transmit and receive data through the radio frequency path in the 5 GHz low frequency band in the other WLAN connection. In this way, concurrency of dual radio frequency paths in 5 GHz frequency bands can be implemented, a data transmission delay can be reduced, and communication quality can be improved.

## Description

This application claims priority to Chinese Patent Application No. 202011357175.X, filed with the China National Intellectual Property Administration on November 27, 2020 and entitled "WLAN COMMUNICATION METHOD AND RELATED APPARATUS", and priority to Chinese Patent Application No. 202110230414.3, filed with the China National Intellectual Property Administration on March 2, 2021 and entitled "WLAN COMMUNICATION METHOD AND RELATED APPARATUS", which are incorporated herein by reference in their entireties.

### TECHNICAL FIELD

This application relates to the communication field, and in particular, to a WLAN communication method and a related apparatus.

### BACKGROUND

With promotion of some low-latency scenario services (for example, a projection scenario), electronic devices such as a smartphone, a tablet, and a computer provide a multi-device collaboration function for a user. The user may perform projection interaction with another device (for example, project a game interface of a mobile phone to a television) when operating the electronic device. To improve user experience, a delay of interaction between devices is required to be as small as possible.

Currently, when electronic devices such as a mobile phone and a tablet perform communication on a Wi-Fi 5 GHz frequency band, a dual band adaptive concurrent (dual band adaptive concurrent, DBAC) mechanism may be used. Because the DBAC mechanism has only one radio frequency (radio frequency, RF) front-end, when the electronic device is in the DBAC mechanism, the electronic device can perform communication on only one channel on one frequency band at a time. Therefore, when the electronic device simultaneously communicates with two or more devices on the 5 GHz frequency band by using a Wi-Fi technology, channels for communication between the electronic device and other devices are different, that is, an intra-frequency inter-channel case occurs. In an intra-frequency inter-channel scenario, to communicate with two or more devices on the 5 GHz frequency band within a period of time, the electronic device needs to frequently switch channels on the 5 GHz frequency band. Consequently, time overheads are generated, a delay-sensitive service is greatly affected, and user experience is reduced.

### SUMMARY

This application provides a WLAN communication method and a related apparatus. In this application, a design of a radio frequency path is modified, and a radio frequency path in a 5 GHz high frequency band and a radio frequency path in a 5 GHz low frequency band are configured in a WLAN communication module of an electronic device by using a feature of a wide Wi-Fi 5 GHz frequency band. In this way, concurrency of dual radio frequency paths in 5 GHz frequency bands is implemented, a data transmission delay is reduced, and communication quality is improved. The foregoing objective and other objectives are achieved by using features in the independent claims. Further implementations are embodied in the dependent claims, the specification, and the accompanying drawings.

According to a first aspect, this application provides an electronic device, that is, a first electronic device. The first electronic device may include a processor, a first radio frequency path, a second radio frequency path, a first antenna, and a second antenna. The first radio frequency path includes a first all-pass filter of a wireless fidelity Wi-Fi 5 GHz frequency band and a low-pass filter of the Wi-Fi 5 GHz frequency band. The second radio frequency path includes a second all-pass filter of the wireless fidelity Wi-Fi 5 GHz frequency band and a high-pass filter of the Wi-Fi 5 GHz frequency band. For example, a frequency range of a signal that can pass through the first all-pass filter and the second all-pass filter is 5.15 GHz to 5.925 GHz, a frequency range of a signal that can pass through the low-pass filter is 5.17 GHz to 5.33 GHz, and a frequency range of a signal that can pass through the high-pass filter is 5.49 GHz to 5.835 GHz.

The processor may be configured to: control the first radio frequency path to filter, by using the first all-pass filter, a signal received by the first antenna or a signal to be sent by the first antenna, and control the second radio frequency path to filter, by using the second all-pass filter, a signal received by the second antenna or a signal to be sent by the second antenna.

The processor may be further configured to: when detecting that the first electronic device meets a preset condition, control the first radio frequency path to filter, by using the low-pass filter, the signal received by the first antenna or the signal to be sent by the first antenna, and control the second radio frequency path to filter, by using the high-pass filter, the signal received by the second antenna or the signal to be sent by the second antenna.

When the electronic device provided in this application needs to establish two WLAN connections, because a radio frequency path in a 5 GHz high frequency band and a radio frequency path in a 5 GHz low frequency band are configured in a WLAN communication module of the electronic device, the electronic device may transmit and receive data through the radio frequency path in the 5 GHz high frequency band in one WLAN connection, and transmit and receive data through the radio frequency path in the 5 GHz low frequency band in the other WLAN connection. In this way, concurrency of dual radio frequency paths in 5 GHz frequency bands can be implemented, and a data transmission delay can be reduced.

In a possible implementation, the preset condition may include that the first electronic device establishes a Wi-Fi connection to a wireless access device through a first channel on the Wi-Fi 5 GHz frequency band, and the first electronic device establishes a Wi-Fi direct connection to a second electronic device through a second channel on the Wi-Fi 5 GHz frequency band.

In a possible implementation, the processor may be specifically configured to: when a frequency of the second channel falls within a filtering frequency range of the low-pass filter, control the first radio frequency path to filter, by using the low-pass filter, a signal received by the first antenna on the second channel or a signal to be sent by the first antenna on the second channel.

In a possible implementation, the processor may be further configured to: when a frequency of the first channel falls within a filtering range of the low-pass filter, control a channel on which the Wi-Fi connection between the first electronic device and the wireless access device is located to be switched from the first channel to a third channel on the Wi-Fi 5 GHz frequency band. A frequency of the third channel falls within a filtering range of the high-pass filter. The processor is specifically configured to control the second radio frequency path to filter, by using the high-pass filter, a signal received by the second antenna on the third channel or a signal to be sent by the second antenna on the third channel.

In this way, because two channels established on the first electronic device are in a same filtering range (for example, the filtering range of the low-pass filter), after a narrow-band filter is used on both radio frequency paths, the channel on which the Wi-Fi connection between the first electronic device and the wireless access device is located may be preferentially switched to a channel in another filtering range (for example, the filtering range of the high-pass filter), to ensure that channel transmission of the Wi-Fi direct connection between the first electronic device and the second electronic device is not interfered, and reduce a data transmission delay over the Wi-Fi direct connection.

In a possible implementation, the processor is specifically configured to: when a frequency of the first channel falls within a filtering range of the high-pass filter, control the second radio frequency path to filter, by using the high-pass filter, a signal received by the second antenna on the first channel or a signal to be sent by the second antenna on the first channel.

In a possible implementation, the processor is specifically configured to: when a frequency of the second channel falls within a filtering frequency range of the high-pass filter, control the second radio frequency path to filter, by using the high-pass filter, a signal received by the second antenna on the second channel or a signal to be sent by the second antenna on the second channel.

In a possible implementation, the processor is further configured to: when a frequency of the first channel falls within a filtering range of the high-pass filter, control a channel on which the Wi-Fi connection between the first electronic device and the wireless access device is located to be switched from the first channel to a fourth channel on the Wi-Fi 5 GHz frequency band. A frequency of the fourth channel falls within a filtering range of the low-pass filter. The processor is specifically configured to control the first radio frequency path to filter, by using the low-pass filter, a signal received by the first antenna on the fourth channel or a signal to be sent by the first antenna on the fourth channel.

In this way, because two channels established on the first electronic device are in a same filtering range (for example, the filtering range of the high-pass filter), after the narrow-band filter is used on both radio frequency paths, the channel on which the Wi-Fi connection between the first electronic device and the wireless access device is located may be preferentially switched to a channel in another filtering range (for example, the filtering range of the low-pass filter), to ensure that channel transmission of the Wi-Fi direct connection between the first electronic device and the second electronic device is not interfered, and reduce a data transmission delay over the Wi-Fi direct connection.

In a possible implementation, the processor is specifically configured to: when a frequency of the first channel falls within a filtering range of the low-pass filter, control, by the first electronic device, the first radio frequency path to filter, by using the low-pass filter, a signal received by the first antenna on the first channel or a signal to be sent by the first antenna on the first channel.

In a possible implementation, the preset condition includes that the first electronic device establishes a Wi-Fi connection to a wireless access device through a first channel on the Wi-Fi 5 GHz frequency band, and the first electronic device receives a first operation of projection to a second electronic device. The processor is specifically configured to: when a frequency of the first channel falls within a filtering frequency range of the low-pass filter, in response to the first operation, control the first electronic device to establish a Wi-Fi direct connection to the second electronic device through a second channel on the Wi-Fi 5 GHz frequency band. A frequency of the second channel falls within a filtering frequency range of the high-pass filter. The processor may further control the first radio frequency path to filter, by using the low-pass filter, a signal received by the first antenna on the first channel or a signal to be sent by the first antenna on the first channel, and control the second radio frequency path to filter, by using the high-pass filter, a signal received by the second antenna on the second channel or a signal to be sent by the second antenna on the second channel.

In a possible implementation, the processor is further configured to: when the frequency of the first channel falls within the filtering frequency range of the high-pass filter, in response to the first operation, control the first electronic device to establish the Wi-Fi direct connection to the second electronic device through the second channel on the Wi-Fi 5 GHz frequency band. The frequency of the second channel falls within the filtering frequency range of the low-pass filter. The processor may further control the second radio frequency path to filter, by using the high-pass filter, a signal received by the second antenna on the first channel or a signal to be sent by the second antenna on the first channel, and control the first radio frequency path to filter, by using the low-pass filter, a signal received by the first antenna on the second channel or a signal to be sent by the first antenna on the second channel.

In this way, because the first electronic device has established the Wi-Fi connection to the wireless access device, after the narrow-band filter is used on both radio frequency paths, the first electronic device may establish the Wi-Fi direct connection to the second electronic device through the second channel. The first channel and the second channel fall within different filtering ranges (for example, the first channel falls within the filtering range of the high-pass filter, and the second channel falls within the filtering range of the low-pass filter), to ensure that channel transmission of the Wi-Fi connection between the first electronic device and the wireless access device is not interfered, and reduce a data transmission delay over the Wi-Fi connection.

In a possible implementation, the preset condition includes that the first electronic device establishes a Wi-Fi direct connection to a second electronic device through a second channel on the Wi-Fi 5 GHz frequency band, and the first electronic device receives a second operation of establishing a Wi-Fi connection to a wireless access device. The processor is specifically configured to: when a frequency of the second channel falls within a filtering frequency range of the low-pass filter, in response to the second operation, control the first electronic device to establish the Wi-Fi connection to the wireless access device through a first channel on the Wi-Fi 5 GHz frequency band. A frequency of the first channel falls within a filtering frequency range of the high-pass filter. The processor may be further configured to: control the first radio frequency path to filter, by using the low-pass filter, a signal received by the first antenna on the second channel or a signal to be sent by the first antenna on the second channel, and control the second radio frequency path to filter, by using the high-pass filter, a signal received by the second antenna on the first channel or a signal to be sent by the second antenna on the first channel.

In a possible implementation, the processor is further configured to: when the frequency of the second channel falls within the filtering frequency range of the high-pass filter, in response to the second operation, control the first electronic device to establish the Wi-Fi connection to the wireless access device through the first channel on the Wi-Fi 5 GHz frequency band. The frequency of the first channel falls within the filtering frequency range of the low-pass filter. The processor may further control the first radio frequency path to filter, by using the low-pass filter, a signal received by the first antenna on the first channel or a signal to be sent by the first antenna on the first channel, and control the second radio frequency path to filter, by using the high-pass filter, a signal received by the second antenna on the second channel or a signal to be sent by the second antenna on the second channel.

In this way, because the first electronic device has established the Wi-Fi direct connection to the second electronic device, after the narrow-band filter is used on both radio frequency paths, the first electronic device may establish the Wi-Fi connection to the wireless access device through the first channel. The first channel and the second channel fall within different filtering ranges (for example, the second channel falls within the filtering range of the low-pass filter, and the first channel falls within the filtering range of the high-pass filter), to ensure that channel transmission of the Wi-Fi direct connection between the first electronic device and the second electronic device is not interfered, and reduce a data transmission delay over the Wi-Fi direct connection.

According to a second aspect, this application provides a WLAN communication method, applied to an electronic device (a first electronic device) provided in this application. The method includes: The first electronic device controls a first radio frequency path to filter, by using a first all-pass filter of a Wi-Fi 5 GHz frequency band, a signal received by a first antenna or a signal to be sent by a first antenna, and controls a second radio frequency path to filter, by using a second all-pass filter of the Wi-Fi 5 GHz frequency band, a signal received by a second antenna or a signal to be sent by a second antenna.

The first radio frequency path includes the first all-pass filter and a low-pass filter of the Wi-Fi SGHz frequency band. The second radio frequency path includes the second all-pass filter and a high-pass filter of the Wi-Fi 5 GHz frequency band.

When detecting that the first electronic device meets a preset condition, the first electronic device controls the first radio frequency path to filter, by using the low-pass filter, the signal received by the first antenna or the signal to be sent by the first antenna, and controls the second radio frequency path to filter, by using the high-pass filter, the signal received by the second antenna or the signal to be sent by the second antenna.

In a possible implementation, the first electronic device establishes a Wi-Fi connection to a wireless access device through a first channel on the Wi-Fi 5 GHz frequency band, and the first electronic device establishes a Wi-Fi direct connection to a second electronic device through a second channel on the Wi-Fi 5 GHz frequency band.

In a possible implementation, that the first electronic device controls the first radio frequency path to filter, by using the low-pass filter, the signal received by the first antenna or the signal to be sent by the first antenna specifically includes: When a frequency of the second channel falls within a filtering frequency range of the low-pass filter, the first electronic device controls the first radio frequency path to filter, by using the low-pass filter, a signal received by the first antenna on the second channel or a signal to be sent by the first antenna on the second channel.

In a possible implementation, the method further includes: When a frequency of the first channel falls within a filtering range of the low-pass filter, the first electronic device controls a channel on which the Wi-Fi connection between the first electronic device and the wireless access device is located to be switched from the first channel to a third channel on the Wi-Fi 5 GHz frequency band. A frequency of the third channel falls within a filtering range of the high-pass filter.

In this way, because two channels established on the first electronic device are in a same filtering range, after a narrow-band filter is used on both radio frequency paths, the channel on which the Wi-Fi connection between the first electronic device and the wireless access device is located may be preferentially switched to a channel in another filtering range, to ensure that channel transmission of the Wi-Fi direct connection between the first electronic device and the second electronic device is not interfered, and reduce a data transmission delay over the Wi-Fi direct connection.

That the first electronic device controls the second radio frequency path to filter, by using the high-pass filter, the signal received by the second antenna or the signal to be sent by the second antenna specifically includes: The first electronic device controls the first radio frequency path to filter, by using the low-pass filter, a signal received by the first antenna on the third channel or a signal to be sent by the first antenna on the third channel.

In a possible implementation, the method further includes: When a frequency of the first channel falls within a filtering range of the high-pass filter, the first electronic device controls the second radio frequency path to filter, by using the high-pass filter, a signal received by the second antenna on the first channel or a signal to be sent by the second antenna on the first channel.

In a possible implementation, that the first electronic device controls the second radio frequency path to filter, by using the high-pass filter, the signal received by the second antenna or the signal to be sent by the second antenna specifically includes: When a frequency of the second channel falls within a filtering frequency range of the high-pass filter, the first electronic device controls the second radio frequency path to filter, by using the high-pass filter, a signal received by the second antenna on the second channel or a signal to be sent by the second antenna on the second channel.

In a possible implementation, the method further includes: When a frequency of the first channel falls within a filtering range of the high-pass filter, the first electronic device controls a channel on which the Wi-Fi connection between the first electronic device and the wireless access device is located to be switched from the first channel to a fourth channel on the Wi-Fi 5 GHz frequency band. A frequency of the fourth channel falls within a filtering range of the low-pass filter. That the first electronic device controls the first radio frequency path to filter, by using the low-pass filter, the signal received by the first antenna or the signal to be sent by the first antenna specifically includes: The first electronic device controls the first radio frequency path to filter, by using the low-pass filter, a signal received by the first antenna on the fourth channel or a signal to be sent by the first antenna on the fourth channel.

In a possible implementation, that the first electronic device controls the first radio frequency path to filter, by using the low-pass filter, the signal received by the first antenna or the signal to be sent by the first antenna specifically includes: When a frequency of the first channel falls within a filtering range of the low-pass filter, the first electronic device controls the first radio frequency path to filter, by using the low-pass filter, a signal received by the first antenna on the first channel or a signal to be sent by the first antenna on the first channel.

In this way, because two channels established on the first electronic device are in a same filtering range (for example, the filtering range of the high-pass filter), after the narrow-band filter is used on both radio frequency paths, the channel on which the Wi-Fi connection between the first electronic device and the wireless access device is located may be preferentially switched to a channel in another filtering range (for example, the filtering range of the low-pass filter), to ensure that channel transmission of the Wi-Fi direct connection between the first electronic device and the second electronic device is not interfered, and reduce a data transmission delay over the Wi-Fi direct connection.

In a possible implementation, the preset condition includes that the first electronic device establishes a Wi-Fi connection to a wireless access device through a first channel on the Wi-Fi 5 GHz frequency band, and the first electronic device receives a first operation of projection to a second electronic device.

That the first electronic device controls the first radio frequency path to filter, by using the low-pass filter, the signal received by the first antenna or the signal to be sent by the first antenna, and controlling the second radio frequency path to filter, by using the high-pass filter, the signal received by the second antenna or the signal to be sent by the second antenna specifically includes: When a frequency of the first channel falls within a filtering frequency range of the low-pass filter, in response to the first operation, the first electronic device establishes a Wi-Fi direct connection to the second electronic device through a second channel on the Wi-Fi 5 GHz frequency band. A frequency of the second channel falls within a filtering frequency range of the low-pass filter.

The first electronic device controls the first radio frequency path to filter, by using the low-pass filter, a signal received by the first antenna on the first channel or a signal to be sent by the first antenna on the first channel, and controls the second radio frequency path to filter, by using the high-pass filter, a signal received by the second antenna on the second channel or a signal to be sent by the second antenna on the second channel.

In a possible implementation, the method further includes: When the frequency of the first channel falls within the filtering frequency range of the high-pass filter, in response to the first operation, the first electronic device establishes the Wi-Fi direct connection to the second electronic device through the second channel on the Wi-Fi 5 GHz frequency band. The frequency of the second channel falls within the filtering frequency range of the low-pass filter.

The first electronic device controls the second radio frequency path to filter, by using the high-pass filter, a signal received by the second antenna on the first channel or a signal to be sent by the second antenna on the first channel, and controls the first radio frequency path to filter, by using the low-pass filter, a signal received by the first antenna on the second channel or a signal to be sent by the first antenna on the second channel.

In this way, because the first electronic device has established the Wi-Fi connection to the wireless access device, after the narrow-band filter is used on both radio frequency paths, the first electronic device may establish the Wi-Fi direct connection to the second electronic device through the second channel. The first channel and the second channel fall within different filtering ranges (for example, the first channel falls within the filtering range of the high-pass filter, and the second channel falls within the filtering range of the low-pass filter), to ensure that channel transmission of the Wi-Fi connection between the first electronic device and the wireless access device is not interfered, and reduce a data transmission delay over the Wi-Fi connection.

In a possible implementation, the preset condition includes that the first electronic device establishes a Wi-Fi direct connection to a second electronic device through a second channel on the Wi-Fi 5 GHz frequency band, and the first electronic device receives a second operation of establishing a Wi-Fi connection to a wireless access device.

That the first electronic device controls the first radio frequency path to filter, by using the low-pass filter, the signal received by the first antenna or the signal to be sent by the first antenna, and controls the second radio frequency path to filter, by using the high-pass filter, the signal received by the second antenna or the signal to be sent by the second antenna specifically includes: When a frequency of the second channel falls within a filtering frequency range of the low-pass filter, in response to the second operation, the first electronic device establishes the Wi-Fi connection to the wireless access device through a first channel on the Wi-Fi 5 GHz frequency band. A frequency of the first channel falls within a filtering frequency range of the high-pass filter.

The first electronic device controls the first radio frequency path to filter, by using the low-pass filter, a signal received by the first antenna on the second channel or a signal to be sent by the first antenna on the second channel, and controls the second radio frequency path to filter, by using the high-pass filter, a signal received by the second antenna on the first channel or a signal to be sent by the second antenna on the first channel.

In a possible implementation, the method further includes: When the frequency of the second channel falls within the filtering frequency range of the high-pass filter, in response to the second operation, the first electronic device establishes the Wi-Fi connection to the wireless access device through the first channel on the Wi-Fi 5 GHz frequency band. The frequency of the first channel falls within the filtering frequency range of the low-pass filter.

The first electronic device controls the first radio frequency path to filter, by using the low-pass filter, a signal received by the first antenna on the first channel or a signal to be sent by the first antenna on the first channel, and controls the second radio frequency path to filter, by using the high-pass filter, a signal received by the second antenna on the second channel or a signal to be sent by the second antenna on the second channel.

In this way, because the first electronic device has established the Wi-Fi direct connection to the second electronic device, after the narrow-band filter is used on both radio frequency paths, the first electronic device may establish the Wi-Fi connection to the wireless access device through the first channel. The first channel and the second channel fall within different filtering ranges (for example, the second channel falls within the filtering range of the low-pass filter, and the first channel falls within the filtering range of the high-pass filter), to ensure that channel transmission of the Wi-Fi direct connection between the first electronic device and the second electronic device is not interfered, and reduce a data transmission delay over the Wi-Fi direct connection.

According to a third aspect, an embodiment of this application provides a computer storage medium, including computer instructions. When the computer instructions are run on a first electronic device provided in this application, the first electronic device is enabled to perform the WLAN communication method according to any possible implementation of any one of the foregoing aspects.

According to a fourth aspect, an embodiment of this application provides a computer program product. When the computer program product runs on a first electronic device provided in this application, the first electronic device is enabled to perform the WLAN communication method in any possible implementation of any one of the foregoing aspects.

### BRIEF DESCRIPTION OF DRAWINGS

FIG. 1 is a channel distribution diagram of a Wi-Fi 5 GHz frequency band according to an embodiment of this application;
FIG. 2 shows a channel connection scenario in single-AP networking according to an embodiment of this application;
FIG. 3 shows a channel connection scenario in multi-AP networking according to an embodiment of this application;
FIG. 4A and FIG. 4B show a channel connection scenario when single-AP networking is switched to multi-AP networking according to an embodiment of this application;
FIG. 5A and FIG. 5B show a channel connection scenario when an electronic device accesses a wireless access device in a wired manner according to an embodiment of this application;
FIG. 6A to FIG. 6D show a working mechanism used when two WLAN connections on an electronic device are in an intra-frequency inter-channel mode according to an embodiment of this application;
FIG. 7A to FIG. 7C show a scenario in which a WLAN communication module separately uses a channel on a 2.4 GHz frequency band and a channel on a 5 GHz frequency band in a Wi-Fi technology to perform communication according to an embodiment of this application;
FIG. 8 is a schematic diagram of a structure of an electronic device according to an embodiment of this application;
FIG. 9 is a schematic diagram of a structure of an electronic device according to an embodiment of this application;
FIG. 10 is a schematic diagram of a structure of a wireless access device according to an embodiment of this application;
FIG. 11 is a schematic diagram of a radio frequency system according to an embodiment of this application;
FIG. 12 is a diagram of an application scenario of a WLAN communication method according to an embodiment of this application;
FIG. 13 is a flowchart of a WLAN communication method according to an embodiment of this application;
FIG. 14 is a schematic diagram of a structure of a radio frequency path according to an embodiment of this application;
FIG. 15 is a diagram of a working principle of a radio frequency system according to an embodiment of this application; and
FIG. 16A and FIG. 16B are a flowchart of a WLAN communication method according to an embodiment of this application.

### DESCRIPTION OF EMBODIMENTS

The technical solutions according to embodiments of this application are clearly and completely described in the following with reference to the accompanying drawings. In descriptions in embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of means two or more than two.

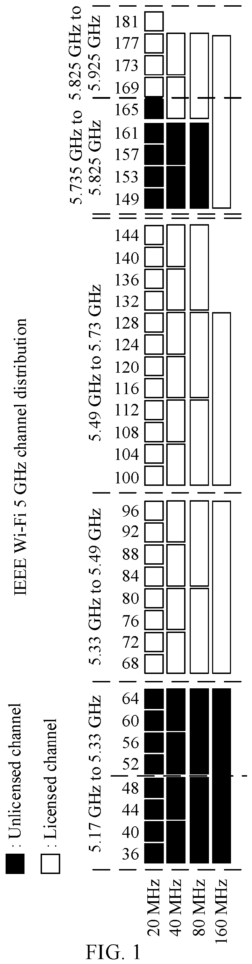

FIG. 1 shows a channel distribution diagram of a wireless fidelity (wireless fidelity, Wi-Fi) 5 GHz frequency band formulated by the institute of electrical and electronics engineers (institute of electrical and electronics engineers, IEEE).

In an actual application, if all Wi-Fi devices use a same frequency band, the Wi-Fi devices easily interfere with each other. Therefore, the frequency band needs to be divided into a plurality of channels (the channel may also be referred to as a path, and is a data signal transmission path that uses an electromagnetic wave as a transmission carrier) to distribute the devices. The institute of electrical and electronics engineers proposes a division standard. A channel division rule in China is used as an example. Channels on a 5 GHz frequency band may be classified into a licensed channel and an unlicensed channel. For a division result, refer to FIG. 1. A frequency bandwidth of each channel is 20 MHz. The channel on the 5 GHz frequency band also supports link aggregation, and two channels or four channels may be aggregated into one channel. A frequency bandwidth of a channel obtained through link aggregation may be 40 MHz, 80 MHz, or the like. Black blocks shown in FIG. 1 are unlicensed channels (which may be referred to as available channels in this solution), that is, channels that can be used without being licensed. A frequency range of the unlicensed channel includes 5.17 GHz to 5.33 GHz, and channels in the frequency range include a channel 36, a channel 40, a channel 44, a channel 48, a channel 52, a channel 56, a channel 60, and a channel 64. The frequency range of the unlicensed channel further includes 5.735 GHz to 5.825 GHz, and available channels in the frequency range include a channel 149, a channel 153, a channel 157, a channel 161, and a channel 165. Channels in other frequency ranges (white blocks) in FIG. 1 are all licensed channels (which may be referred to as unavailable channels in this solution), that is, channels that can be used only after being licensed.

The unlicensed channel may include an open channel (also referred to as a general channel) and a radar channel. A frequency range of the open channel may include 5.17 GHz to 5.25 GHz, and channels include the channel 36, the channel 40, the channel 44, and the channel 48. The frequency range of the open channel may further include 5.735 GHz to 5.825 GHz, and channels include the channel 149, the channel 153, the channel 157, the channel 161, and the channel 165. A frequency range of the radar channel includes 5.25 GHz to 5.33 GHz, channels include the channel 52, the channel 56, the channel 60, and the channel 64. A device that needs to use the radar channel needs to have a dynamic frequency selection (dynamic frequency selection, DFS) function. The radar channel can be used only after DFS detection succeeds. In this embodiment of this application, the radar channel may be referred to as a DFS channel.

In some countries and regions, division of the licensed channel and the unlicensed channel on the 5 GHz frequency band is different from that in FIG. 1. The unlicensed channel on the 5 GHz frequency band may further include an indoor channel (indoors channel). For example, the indoor channel may include the channel 36, the channel 40, the channel 44, the channel 48, the channel 52, the channel 56, the channel 60, and the channel 64. The indoor channel may be used by a radar signal, and the like. Therefore, a device that needs to use the indoor channel needs to have a function of detecting whether the device is located indoors. The indoor channel can be used only after the device detects that the device is located indoors. In this embodiment of this application, a wireless access device may use the indoor channel. In some countries and regions, the indoor channel on the 5 GHz frequency band may also include a radar channel on the 5 GHz frequency band. For example, the channel 52 to the channel 64 are both the indoor channels and the radar channels.

Next, a mechanism for communication between electronic devices is described in this embodiment of this application.

When working, the wireless access device (access point, AP) detects an occupation status of the unlicensed channel on the 5 GHz frequency band, and then selects a channel as a channel used for communication. The selected channel herein may be a channel on which a quantity of devices or a quantity of data packets on the 5 GHz frequency band is smallest. Then, the wireless access device periodically broadcasts a beacon frame (the beacon frame includes information such as a supported rate and an SSID) through the selected channel. The beacon frame (for example, a beacon frame) may be used to notify a station (station, STA) device in a wireless local area network (wireless local area network, WLAN) to establish a communication connection to the wireless access device on the selected channel.

When accessing the wireless access device, the STA device detects, on each channel, the beacon frame periodically sent by the wireless access device, to obtain a related message of the wireless access device. After receiving the beacon frame, the STA sends a message through the selected channel, to establish the communication connection to the wireless access device.

In a WLAN direct connection, for example, when a projection service is implemented by using a Wi-Fi peer to peer (peer to peer, P2P) technology, a party that initiates projection is referred to as a group client (group client, GC), and a party that displays projection is referred to as a group owner (group owner, GO). In Wi-Fi P2P settings, it is preferentially ensured that GO channels are not affected. To be specific, when a GC device accesses a GO device, regardless of whether a channel used by the GC for communication is consistent with that used by the GO device, the channel used by the GO device is selected for a Wi-Fi P2P connection. However, when a channel currently used by the GO device for communication is a DFS channel/indoors channel, the GC device cannot perform the Wi-Fi P2P connection to the GO device through the channel currently used by the GO device. Details are as follows.

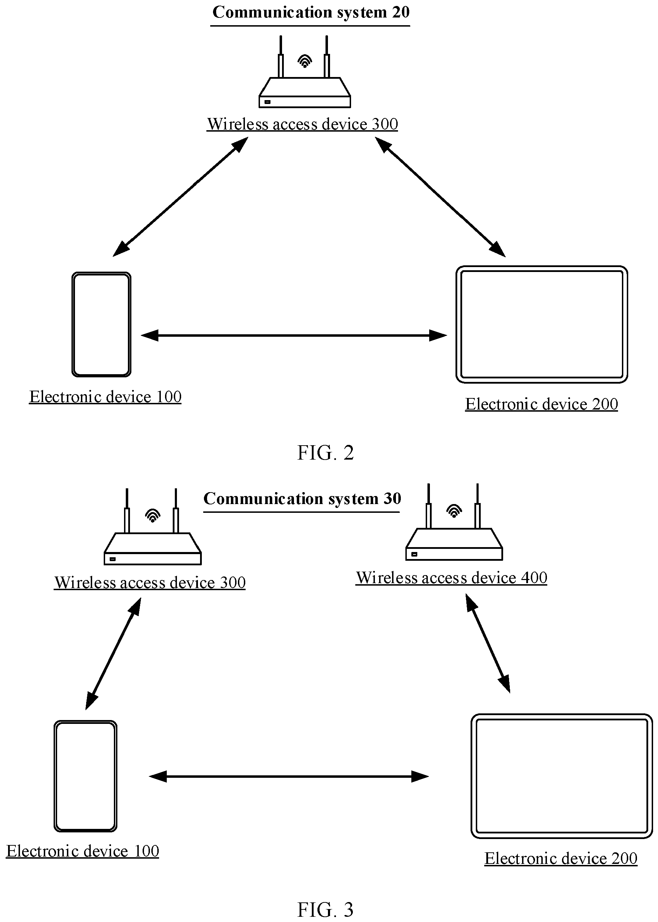

Some electronic devices (for example, an electronic device 200) that do not have the function of detecting whether the device is located indoors cannot use the indoor channel on the 5 GHz frequency band in the WLAN direct connection. After the electronic device establishes a communication connection to the wireless access device on an indoor channel on the 5 GHz frequency band, if the electronic device needs to establish a WLAN direct connection to another electronic device, an intra-frequency inter-channel case occurs. For detailed descriptions, refer to text descriptions in FIG. 2 and FIG. 3.

When the electronic device performs communication through the radar channel on the 5 GHz frequency band, the DFS detection needs to be performed first. However, some electronic devices (for example, the electronic device 200) do not have the DFS function, and these electronic devices cannot use the radar channel in the WLAN direct connection. Alternatively, if the electronic device has the DFS function, because the DFS detection takes an excessively long time, to ensure quality of the WLAN direct connection, the electronic device does not use the radar channel during the WLAN direct connection.

In this embodiment of this application, in countries and regions where the radar channel is divided on the 5 GHz frequency band, when a WLAN direct connection is established between two devices, the two devices cannot use the radar channel on the 5 GHz frequency band. In countries and regions where the indoor channel is divided on the 5 GHz frequency band, when a WLAN direct connection is established between two devices, the two devices cannot use the indoor channel on the 5 GHz frequency band. In this embodiment of this application, a preset channel may be used to represent these channels that cannot be used in the WLAN direct connection. For example, in some countries and regions, the radar channel is divided, and the preset channel may be a radar channel. In other countries and regions, the preset channel may be an indoor channel. In some other countries and regions, both the radar channel and the indoor channel are divided, and the preset channel may be a radar channel, an indoor channel, and the like. In other words, in this embodiment of this application, the unlicensed channel on the 5 GHz frequency band may be divided into a general channel and a preset channel. For example, the general channel may include the channel 36, the channel 48, the channel 149, the channel 165, and the like. For example, the preset channel may include the channel 52, the channel 64, and the like. In the WLAN direct connection, the general channel can be used, but the preset channel cannot be used.

Therefore, a plurality of channels are divided on the 5 GHz frequency band. When the electronic device communicates with two or more electronic devices on the 5 GHz frequency band by using a Wi-Fi technology, channels connected between the electronic device and a plurality of devices may be different, that is, an intra-frequency inter-channel case occurs. In an intra-frequency inter-channel scenario, to communicate with two or more devices on the 5 GHz frequency band within a period of time, the electronic device needs to frequently switch channels on the 5 GHz frequency band. Consequently, time overheads are generated, and communication efficiency is reduced.

The following describes an intra-frequency inter-channel scenario in embodiments of this application.

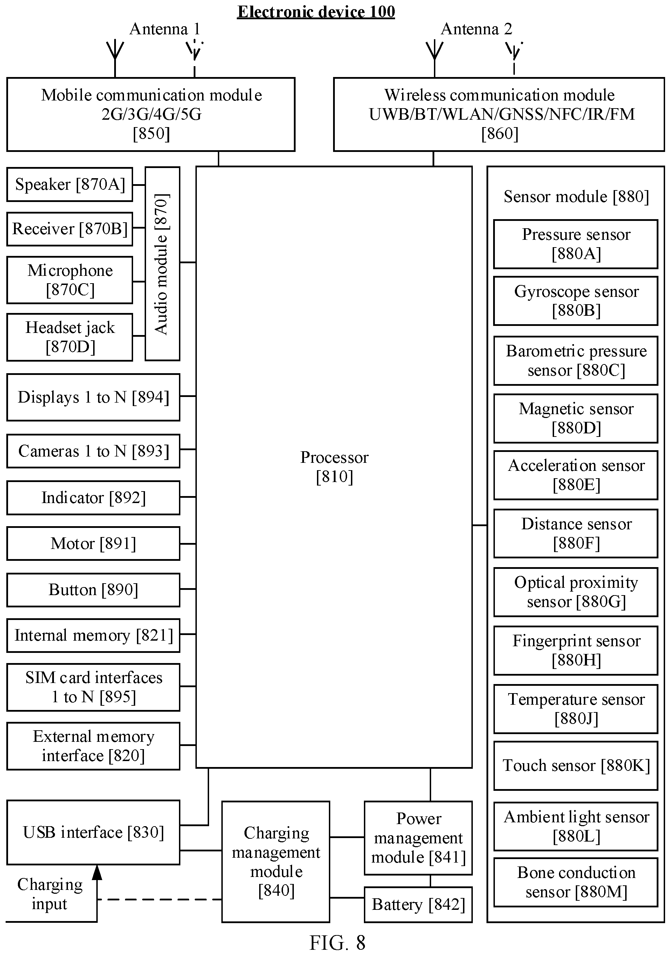

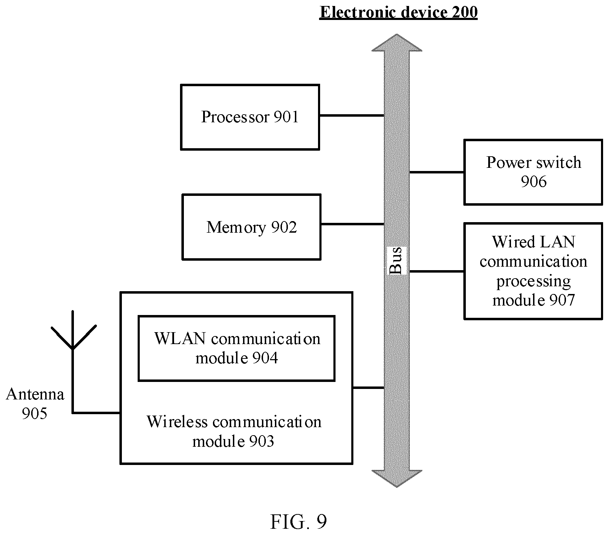

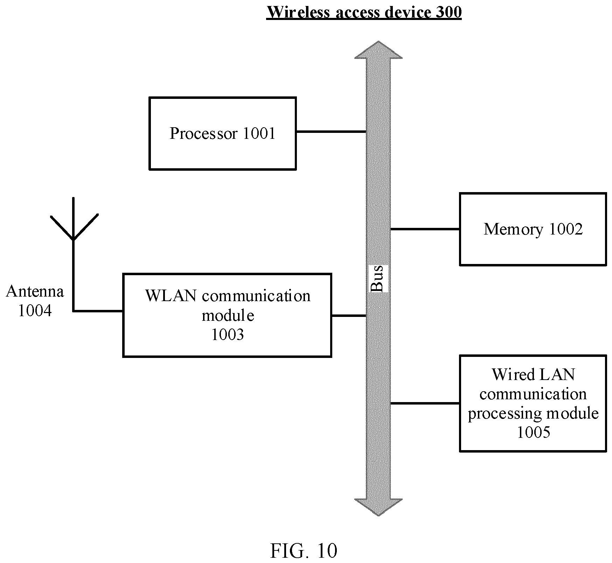

FIG. 2 shows a channel connection scenario in single-AP networking according to an embodiment of this application. The scenario may include three electronic devices: an electronic device 100 (which may also be referred to as a first electronic device), the electronic device 200 (which may also be referred to as a second electronic device), and a wireless access device 300. The three electronic devices may establish a communication connection to form a communication system 20. The electronic device 100 and the electronic device 200 may be any electronic device that supports a Wi-Fi technology and a WLAN direct connection technology. For a diagram of a hardware structure of the electronic device 100, refer to FIG. 8. For a diagram of a hardware structure of the electronic device 200, refer to FIG. 9. The wireless access device 300 may be a computer network device, and may bridge a wired network and a wireless network. For a diagram of a hardware structure, refer to FIG. 10.

As shown in FIG. 2, both the electronic device 100 and the electronic device 200 are used as stations in the wireless local area network to access the wireless access device 300. The wireless access device 300 detects an occupation status of an available channel on a 5 GHz frequency band in a current environment, and then selects a channel as a channel used for communication. The selected channel herein may be a channel on which a quantity of devices or a quantity of data packets on the 5 GHz frequency band is smallest. The wireless access device 300 periodically broadcasts a beacon frame (for example, a beacon frame) through the selected channel. The beacon frame may be used to notify the station in the wireless local area network to establish a communication connection to the wireless access device on the selected channel. When accessing the wireless access device 300, the electronic device 100 and the electronic device 200 detect, on each channel, the beacon frame periodically sent by the wireless access device 300, to obtain a related message of the wireless access device 300. Then, the electronic device 100 and the electronic device 200 send a message through the selected channel, to establish the communication connection to the wireless access device. Due to a requirement of a specified service (for example, a projection service or a file transfer service), the electronic device 100 needs to establish a WLAN direct connection to the electronic device 200. In this scenario, there may be the following cases.
1. When the electronic device 100 communicates with the wireless access device 300 on a general channel on the 5 GHz frequency band, the electronic device 200 also communicates with the wireless access device 300 on the general channel on the 5 GHz frequency band. When the WLAN direct connection between the electronic device 100 and the electronic device 200 is also established on the general channel on the 5 GHz frequency band, two WLAN connections on the electronic device 100 are established on an intra-frequency co-channel, and communication quality of the two WLAN connections on the electronic device 100 is normal. For example, in a projection scenario, when the electronic device 100 sends projection data to the electronic device 200 for display by using the WLAN direct connection, a frame rate of a projection image displayed on the electronic device 200 can reach a quantity of frames per second (Frame Per Second, fps) ranging from 51 fps to 53 fps. In this embodiment of this application, a value of fps is merely an example for description. In this application, when a default frame rate ranges from 51 fps to 53 fps, display of the projection image is smooth. When the default frame rate ranges from 40 fps to 45 fps, display of the projection image freezes. When the default frame rate ranges from 30 fps to 35 fps, display of the projection image freezes severely.
2. When the electronic device 100 communicates with the wireless access device 300 on a preset channel on the 5 GHz frequency band, the electronic device 200 communicates with the wireless access device 300 on the general channel on the 5 GHz frequency band. When the WLAN direct connection between the electronic device 100 and the electronic device 200 is established on the general channel on the 5 GHz frequency band, the two WLAN connections on the electronic device 100 are established in an intra-frequency inter-channel mode (the WLAN direct connection cannot be established on the preset channel on the 5 GHz frequency band), and communication quality of the two WLAN connections on the electronic device 100 is poor. For example, in the projection scenario, when the electronic device 100 sends the projection data to the electronic device 200 for display by using the WLAN direct connection, the frame rate of the projection image displayed on the electronic device 200 ranges from 40 fps to 45 fps, and display of the projection image freezes.
3. When the electronic device 100 communicates with the wireless access device 300 on the general channel on the 5 GHz frequency band, the electronic device 200 communicates with the wireless access device 300 on the preset channel on the 5 GHz frequency band. When the WLAN direct connection between the electronic device 100 and the electronic device 200 is established on the general channel on the 5 GHz frequency band, two WLAN connections on the electronic device 200 are established in an intra-frequency inter-channel mode (the WLAN direct connection cannot be established on the preset channel on the 5 GHz frequency band), and communication quality of the two WLAN connections on the electronic device 200 is poor. For example, in the projection scenario, when the electronic device 200 receives the projection data from the electronic device 100 by using the WLAN direct connection and displays the projection data on the electronic device 200, the frame rate of the projection image displayed on the electronic device 200 ranges from 40 fps to 45 fps, and display of the projection image freezes.
4. When the electronic device 100 communicates with the wireless access device 300 on the preset channel on the 5 GHz frequency band, the electronic device 200 also communicates with the wireless access device 300 on the preset channel on the 5 GHz frequency band. When the WLAN direct connection between the electronic device 100 and the electronic device 200 is established on the general channel on the 5 GHz frequency band (the WLAN direct connection cannot be established on the preset channel on the 5 GHz frequency band), the two WLAN connections on the electronic device 100 are established in the intra-frequency inter-channel mode, and communication quality of the two WLAN connections on the electronic device 100 is poor. The two WLAN connections on the electronic device 200 are established in the intra-frequency inter-channel mode, and communication quality of the two WLAN connections on the electronic device 200 is poor. For example, in the projection scenario, when the electronic device 100 sends the projection data to the electronic device 200 for display by using the WLAN direct connection, the frame rate of the projection image displayed on the electronic device 200 ranges from 30 fps to 35 fps, and display of the projection image freezes severely.

Optionally, in the channel connection scenario in single-AP networking, the electronic device 100/the electronic device 200 may alternatively communicate with the wireless access device 300 through a channel on a 2.4 GHz frequency band. Certainly, even if the channel on the 2.4 GHz frequency band is used for communication, an intra-frequency inter-channel case may occur. For example, the electronic device 100 communicates with the wireless access device 300 through the channel on the 2.4 GHz frequency band, and the electronic device 200 communicates with the wireless access device 300 through the preset channel on the 5 GHz frequency band. The WLAN direct connection between the electronic device 100 and the electronic device 200 can also be established only on the general channel on the 5 GHz frequency band, and the two WLAN connections on the electronic device 200 are established in the intra-frequency inter-channel mode. The cases described in FIG. 2 are merely examples, and other cases are not described.

FIG. 3 shows a channel connection scenario in multi-AP networking according to an embodiment of this application. The scenario includes the electronic device 100, the electronic device 200, the wireless access device 300, and a wireless access device 400. The four devices may form a communication system 30.

The electronic device 100 is used as a station in the wireless local area network to access the wireless access device 300. The electronic device 200 is used as a station in the wireless local area network to access the wireless access device 400. Due to a requirement of a specified service (for example, a projection service or a file transfer service), the electronic device 100 needs to establish a WLAN direct connection to the electronic device 200. In this scenario, there may be the following cases.
1. When the electronic device 100 communicates with the wireless access device 300 on a first general channel on the 5 GHz frequency band, the electronic device 200 communicates with the wireless access device 400 on the first general channel on the 5 GHz frequency band. When the WLAN direct connection between the electronic device 100 and the electronic device 200 is also established on the first general channel on the 5 GHz frequency band, the first general channel on the 5 GHz frequency band may be any general channel, for example, the channel 36. The two WLAN connections on the electronic device 100 are established on the intra-frequency co-channel, and communication quality of the two WLAN connections on the electronic device 100 is normal. The two WLAN connections on the electronic device 200 are established on the intra-frequency co-channel, and communication quality of the two WLAN connections on the electronic device 200 is normal. For example, in the projection scenario, when the electronic device 100 sends the projection data to the electronic device 200 for display by using the WLAN direct connection, the frame rate of the projection image displayed on the electronic device 200 ranges from 51 fps to 53 fps, and display of the projection image is smooth.
2. When the electronic device 100 communicates with the wireless access device 300 on the first general channel on the 5 GHz frequency band, the electronic device 200 communicates with the wireless access device 400 on a second general channel on the 5 GHz frequency band. When the WLAN direct connection between the electronic device 100 and the electronic device 200 is established on the second general channel on the 5 GHz frequency band (a WLAN direct connection channel follows a channel used by the GO device), the second general channel on the 5 GHz frequency band may be any general channel other than the first general channel, for example, the channel 149. The two WLAN connections on the electronic device 100 are established in the intra-frequency inter-channel mode, and communication quality of the two WLAN connections on the electronic device 100 is poor. The two WLAN connections on the electronic device 200 are established on the intra-frequency co-channel, and communication quality of the two WLAN connections on the electronic device 200 is normal. For example, in the projection scenario, when the electronic device 100 sends the projection data to the electronic device 200 for display by using the WLAN direct connection, the frame rate of the projection image displayed on the electronic device 200 ranges from 40 fps to 45 fps, and display of the projection image freezes.
3. When the electronic device 100 communicates with the wireless access device 300 on the first general channel on the 5 GHz frequency band, the electronic device 200 communicates with the wireless access device 400 on the preset channel on the 5 GHz frequency band. When the WLAN direct connection between the electronic device 100 and the electronic device 200 is established on the first general channel on the 5 GHz frequency band (the WLAN direct connection cannot use the preset channel on the 5 GHz frequency band), the two WLAN connections on the electronic device 100 are established on the intra-frequency co-channel, and communication quality of the two WLAN connections on the electronic device 100 is normal. The two WLAN connections on the electronic device 200 are established in the intra-frequency inter-channel mode, and communication quality of the two WLAN connections on the electronic device 200 is poor. For example, in the projection scenario, when the electronic device 100 sends the projection data to the electronic device 200 for display by using the WLAN direct connection, the frame rate of the projection image displayed on the electronic device 200 ranges from 40 fps to 45 fps, and display of the projection image freezes.
4. When the electronic device 100 communicates with the wireless access device 300 on the preset channel on the 5 GHz frequency band, the electronic device 200 communicates with the wireless access device 400 on the first general channel on the 5 GHz frequency band. When the WLAN direct connection between the electronic device 100 and the electronic device 200 is established on the first general channel on the 5 GHz frequency band, the two WLAN connections on the electronic device 100 are established in the intra-frequency inter-channel mode, and communication quality of the two WLAN connections on the electronic device 100 is poor. The two WLAN connections on the electronic device 200 are established on the intra-frequency co-channel, and communication quality of the two WLAN connections on the electronic device 200 is normal. For example, in the projection scenario, when the electronic device 100 sends the projection data to the electronic device 200 for display by using the WLAN direct connection, the frame rate of the projection image displayed on the electronic device 200 ranges from 40 fps to 45 fps, and display of the projection image freezes.
5. When the electronic device 100 communicates with the wireless access device 300 on the preset channel on the 5 GHz frequency band, the electronic device 200 communicates with the wireless access device 400 on the preset channel on the 5 GHz frequency band. When the WLAN direct connection between the electronic device 100 and the electronic device 200 is established on the first general channel on the 5 GHz frequency band, the two WLAN connections on the electronic device 100 are established in the intra-frequency inter-channel mode, and communication quality of the two WLAN connections on the electronic device 100 is poor. The two WLAN connections on the electronic device 200 are established in the intra-frequency inter-channel mode, and communication quality of the two WLAN connections on the electronic device 200 is poor. For example, in the projection scenario, when the electronic device 100 sends the projection data to the electronic device 200 for display by using the WLAN direct connection, the frame rate of the projection image displayed on the electronic device 200 ranges from 30 fps to 35 fps, and display of the projection image freezes severely.

Optionally, in the channel connection scenario in multi-AP networking, the electronic device 100 may alternatively communicate with the wireless access device 300 through the channel on the 2.4 GHz frequency band, and the electronic device 200 may alternatively communicate with the wireless access device 400 through the channel on the 2.4 GHz frequency band. Certainly, even if the channel on the 2.4 GHz frequency band is used for communication between devices, an intra-frequency inter-channel case may occur. For example, the electronic device 100 communicates with the wireless access device 300 through the preset channel on the 5 GHz frequency band, and the electronic device 200 communicates with the wireless access device 400 through the channel on the 2.4 GHz frequency band. The WLAN direct connection between the electronic device 100 and the electronic device 200 can also be established only on the general channel on the 5 GHz frequency band, and the two WLAN connections on the electronic device 100 are established in the intra-frequency inter-channel mode. The cases described in FIG. 3 are merely examples, and other cases are not described.

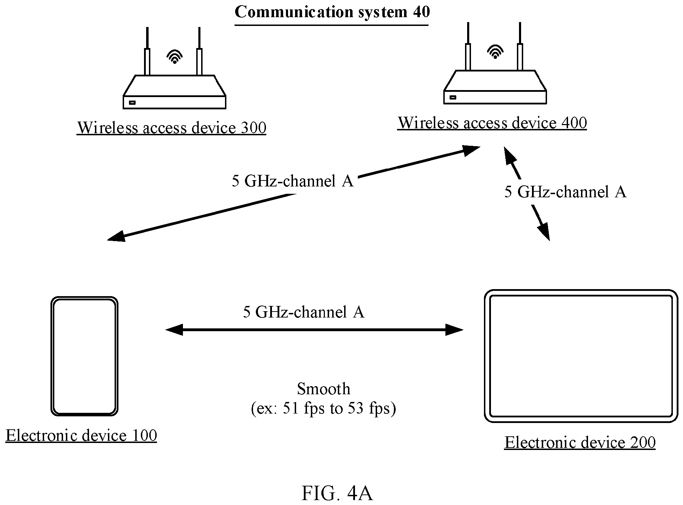

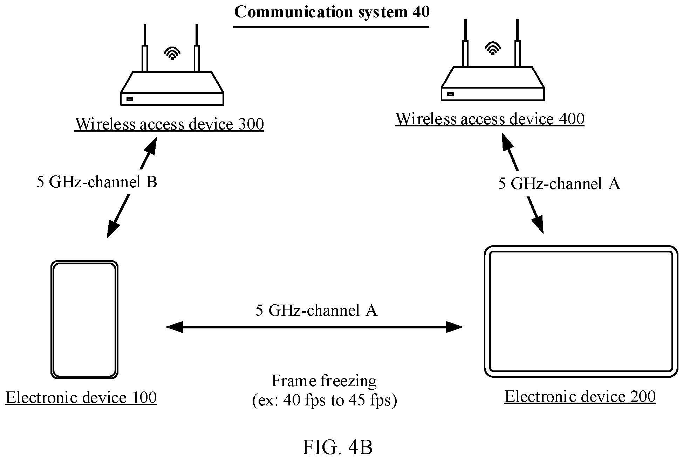

FIG. 4A and FIG. 4B show a channel connection scenario when single-AP networking is switched to multi-AP networking according to an embodiment of this application. The scenario includes the electronic device 100, the electronic device 200, the wireless access device 300, and the wireless access device 400. The four devices may form a communication system 40.

As shown in FIG. 4A, the electronic device 100 is used as a station in the wireless local area network to access the wireless access device 400, and a channel for communication between the electronic device 100 and the wireless access device 400 is a channel A in the general channels on the 5 GHz frequency band. The electronic device 200 is used as a station in the wireless local area network to access the wireless access device 400, and a channel for communication between the electronic device 200 and the wireless access device 400 is the channel A in the general channels on the 5 GHz frequency band. In addition, the electronic device 100 and the electronic device 200 also perform the WLAN direct connection through the channel A in the general channels on the 5 GHz frequency band. The two WLAN connections on the electronic device 100 are established on the intra-frequency co-channel, and communication quality of the two WLAN connections on the electronic device 100 is normal. The two WLAN connections on the electronic device 200 are established on the intra-frequency co-channel, and communication quality of the two WLAN connections on the electronic device 200 is normal. For example, in the projection scenario, when the electronic device 100 sends the projection data to the electronic device 200 for display by using the WLAN direct connection, the frame rate of the projection image displayed on the electronic device 200 ranges from 51 fps to 53 fps, and display of the projection image is smooth.

As shown in FIG. 4B, because a physical location of the electronic device 100 moves away from the wireless access device 400, the electronic device 100 is disconnected from the wireless access device 400, the electronic device 100 accesses the wireless access device 300, and a channel for communication between the electronic device 100 and the wireless access device 300 is a channel B in the general channels on the 5 GHz frequency band. The two WLAN connections on the electronic device 100 are established in the intra-frequency inter-channel mode, and communication quality of the two WLAN connections on the electronic device 100 is poor. For example, in the projection scenario, when the electronic device 100 sends the projection data to the electronic device 200 for display by using the WLAN direct connection, the frame rate of the projection image displayed on the electronic device 200 ranges from 40 fps to 45 fps, and display of the projection image freezes. The channel A in the general channels on the 5 GHz frequency band and the channel B in the general channels on the 5 GHz frequency band are not a same channel.

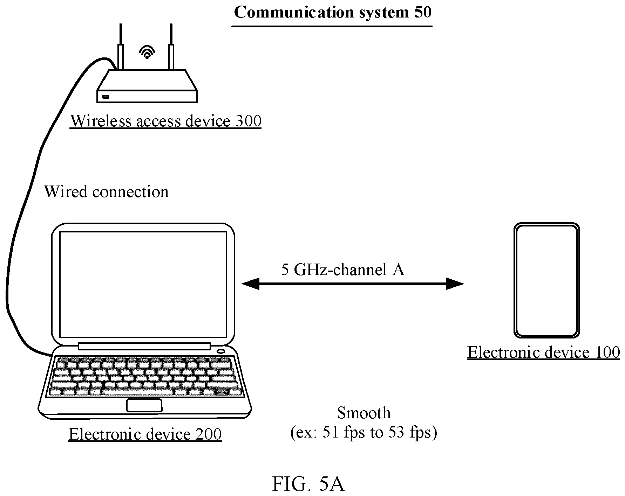

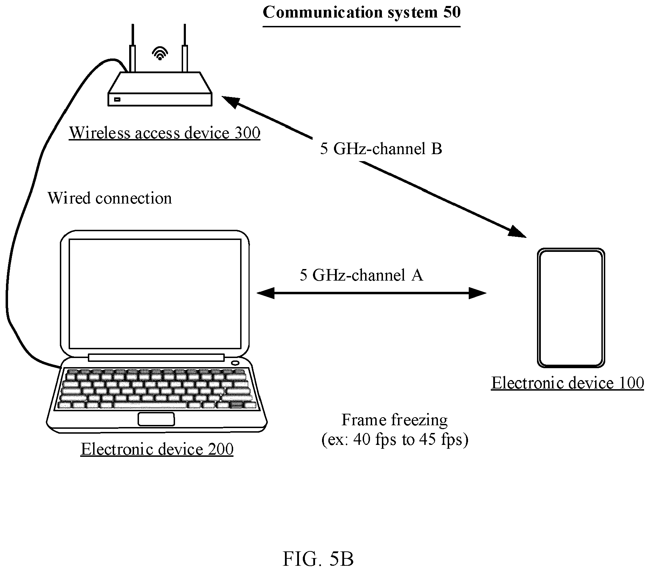

FIG. 5A and FIG. 5B show a channel connection scenario when an electronic device accesses a wireless access device in a wired manner according to an embodiment of this application. The intra-frequency inter-channel case includes the electronic device 100, the electronic device 200, and the wireless access device 300. The three devices may form a communication system 50.

As shown in FIG. 5A, the electronic device 200 establishes a wired connection to the wireless access device 300. The electronic device 100 and the electronic device 200 perform the WLAN direct connection through the channel A in the general channels on the 5 GHz frequency band. There is only one WLAN connection on the electronic device 100, and communication quality of the WLAN connection on the electronic device 100 is normal. For example, in the projection scenario, when the electronic device 100 sends the projection data to the electronic device 200 for display by using the WLAN direct connection, the frame rate of the projection image displayed on the electronic device 200 ranges from 51 fps to 53 fps, and display of the projection image is smooth.

As shown in FIG. 5B, after the electronic device 100 establishes the WLAN direct connection to the electronic device 200, the electronic device 100 may be used as a station in the wireless local area network to access the wireless access device 300, and the channel for communication between the electronic device 100 and the wireless access device 300 is the channel B in the general channels on the 5 GHz frequency band. The two WLAN connections on the electronic device 100 are established in the intra-frequency inter-channel mode, and communication quality of the two WLAN connections on the electronic device 100 is poor. For example, in the projection scenario, when the electronic device 100 sends the projection data to the electronic device 200 for display by using the WLAN direct connection, the frame rate of the projection image displayed on the electronic device 200 ranges from 40 fps to 45 fps, and display of the projection image freezes.

The following describes a working mechanism used when the two WLAN connections on the electronic device 100 in this embodiment of this application are in the intra-frequency inter-channel mode.

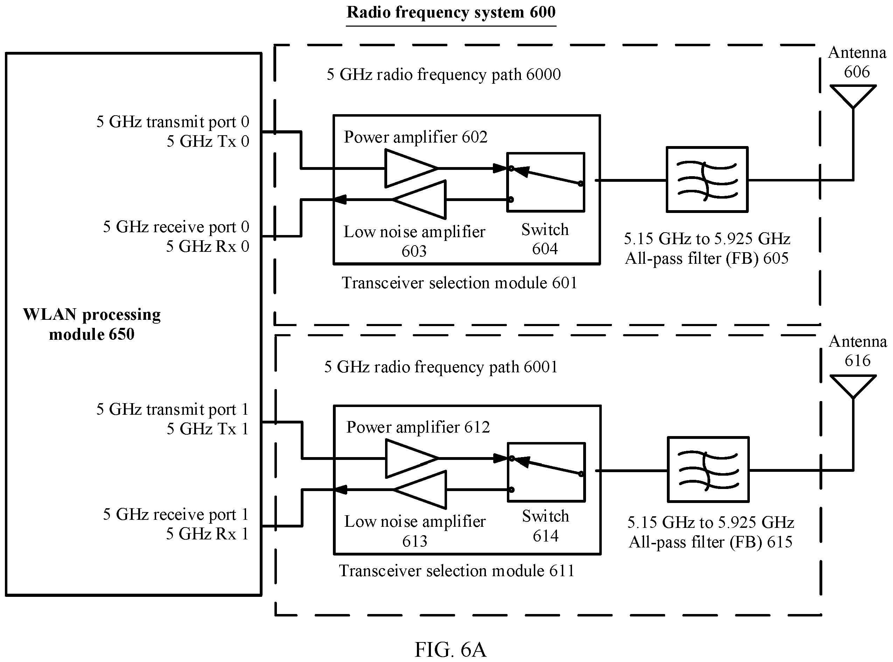

FIG. 6A is a schematic diagram of a radio frequency system 600. In this embodiment of this application, the radio frequency system 600 may be applied to the electronic device 100 (also referred to as the first electronic device).

As shown in FIG. 6A, the radio frequency system 600 may include but is not limited to two radio frequency paths, a WLAN processing module 650, and an antenna. The two radio frequency paths may be a 5 GHz radio frequency path 6000 and a 5 GHz radio frequency path 6001. Each radio frequency path includes a transceiver selection module and an antenna. The transceiver selection module may adjust, based on a control signal of the WLAN processing module 650, the radio frequency path to be in a transmit state or a receive state. The WLAN processing module 650, the radio frequency path, a Wi-Fi driver, all Wi-Fi protocols, and the like may form a WLAN communication module.

When the radio frequency path works in the transmit (transmit, TX) state, a digital signal output by a TX signal processing unit of the WLAN processing module is converted into a low-frequency analog signal through digital-to-analog conversion, and then the low-frequency analog signal is modulated onto a carrier by using a frequency mixer. In the radio frequency path, a modulated high-frequency signal may be amplified by a power amplifier, and is transmitted through the antenna.

When the radio frequency path works in the receive (receive, RX) state, the high-frequency signal received by the antenna is amplified by a low noise amplifier, and then down-converted into a low-frequency analog signal by using the frequency mixer. Through analog-to-digital conversion, the low-frequency analog signal is converted into a digital signal, and then transmitted to an RX signal processing unit for signal receiving processing.

The 5 GHz radio frequency path 6000 may include a transceiver selection module 601 and an all-pass filter 605. The transceiver selection module 601 includes accessories related to transmitting and receiving. For example, as shown in FIG. 6A, the transceiver selection module 601 may include a radio frequency power amplifier (radio frequency power amplifier, RF PA) 602, a low noise amplifier (low noise amplifier, LNA) 603, and a switch 604.

The radio frequency power amplifier 602 is an important component of various radio transmitters. In a pre-stage circuit of the transmitter, power of a radio frequency signal generated by a modulation oscillation circuit is very small, a series of amplification operations need to be performed on the radio frequency signal: a buffer stage, an intermediate amplification stage, and a final power amplification stage, and the radio frequency signal can be fed to the antenna for radiation only after sufficient radio frequency power is obtained. To obtain sufficiently large radio frequency output power, a radio frequency power amplifier needs to be used.

The low noise amplifier 603 is an amplifier with a very small noise coefficient, and is usually used as a high-frequency or intermediate-frequency preamplifier of various radio receivers, and an amplification circuit of a high-sensitivity electronic detection device.

The switch 604 may be a single-pole double-throw switch, may be configured to switch a working state (including the transmit state and the receive state) of the radio frequency path, and may be controlled by the WLAN processing module 650, or controlled by an application processor.

The 5 GHz radio frequency path 1 may include a transceiver selection module 611 and an all-pass filter 615. The transceiver selection module 611 includes accessories related to transmitting and receiving. The transceiver selection module 611 may include a radio frequency power amplifier (radio frequency power amplifier, RF PA) 612 and a low noise amplifier (low noise amplifier, LNA) 613. For detailed descriptions of the 5 GHz radio frequency path 6001, refer to the 5 GHz radio frequency path 6000.

The all-pass filter 605 and the all-pass filter 615 may enable a signal at a useful frequency to pass through, and suppress a signal at a useless frequency at the same time, for example, may enable a signal in a frequency range of 5.15 GHz to 5.925 GHz to pass through, and filter out a signal at another frequency.

An antenna 606 and an antenna 616 are configured to transmit and receive an electromagnetic wave signal.

In FIG. 2, FIG. 3, FIG. 4A, FIG. 4B, FIG. 5A, and FIG. 5B, the electronic device 100 receives and transmits a signal by using the radio frequency system 600. The radio frequency system 600 provides two 5 GHz radio frequency paths. The two radio frequency paths use a DBAC mechanism. The two paths receive and transmit signals at the same time, and signals on different channels cannot be distinguished on the radio frequency paths. Therefore, when an electronic device communicates with different electronic devices on a plurality of channels on the 5 GHz frequency band, channels need to be frequently switched on the 5 GHz frequency band, to meet communication requirements of a plurality of electronic devices.

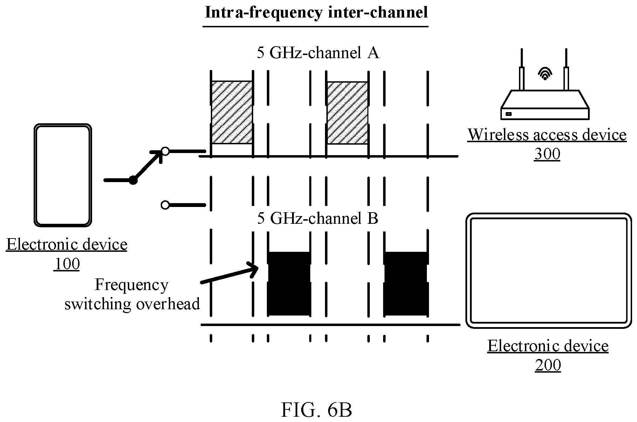

As shown in FIG. 6B, when a radio frequency system of the electronic device 100 is a radio frequency system (for example, the radio frequency system 600) to which the DBAC mechanism is applied, to communicate with the plurality of devices on the plurality of channels on the 5 GHz frequency band, the electronic device 100 needs to frequently switch channels on the 5 GHz frequency band. In FIG. 6B, the electronic device 100 communicates with the wireless access device 300 through the channel A on the 5 GHz frequency band, and the electronic device 100 communicates with the electronic device 200 through the channel B on the 5 GHz frequency band. The channel A and the channel B are different channels on the 5 GHz frequency band. When the electronic device 100 communicates with the wireless access device 300, the electronic device 200 cannot communicate with the electronic device 100, and vice versa. When the electronic device 100 switches from the channel A on the 5 GHz frequency band to the channel B on the 5 GHz frequency band, because during channel switching, the electronic device 100 needs to notify the electronic device 200 to start communication, and also needs to notify the wireless access device 300 to stop communication, frequency switching overheads occur. As shown in FIG. 6B, the electronic device 100 needs to frequently switch channels. Within a period of time, the electronic device 100 needs to switch to the channel A on the 5 GHz frequency band to communicate with the wireless access device 300, and switch to the channel B on the 5 GHz frequency band to communicate with the electronic device 200.

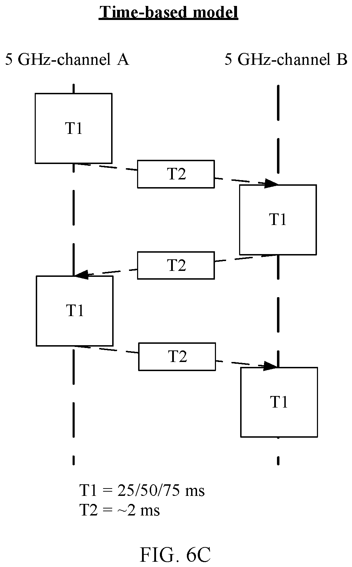

For example, as shown in FIG. 6C, a data stream of the WLAN communication module of the electronic device 100 may be switched back and forth on the channel A and the channel B. A data transmission period occupied by each channel of the WLAN communication module of the electronic device 100 may be T1 (for example, 25 ms, 50 ms, or 75 ms), and a period of time that the WLAN communication module of the electronic device 100 needs to spend each time switching between the channel A and the channel B is T2 (for example, 2 ms). Therefore, a delay of transmitting the data stream by the WLAN communication module of the electronic device 100 is increased.

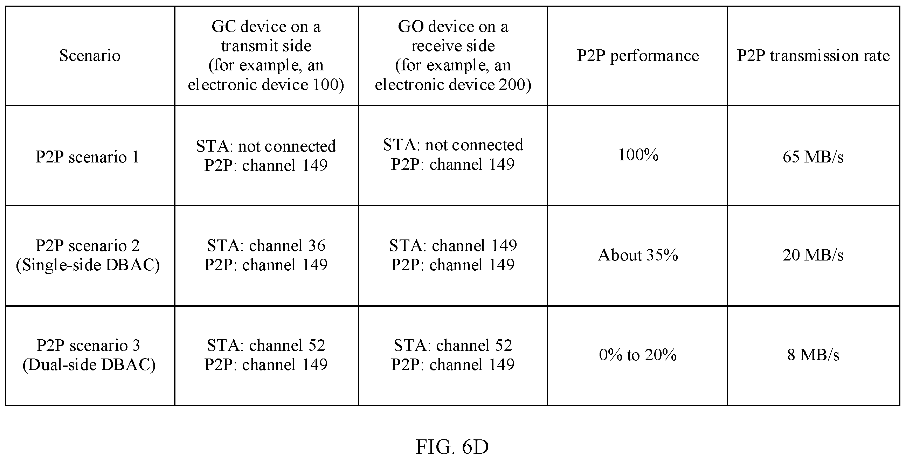

For example, as shown in FIG. 6D, impact of the intra-frequency inter-channel mode on P2P performance is shown.

In a Wi-Fi P2P scenario shown in FIG. 6D, there is an electronic device (a GC device, for example, the electronic device 100) on a transmit side, an electronic device (a GO device, for example, the electronic device 200) on a receive side, and one or more wireless access devices. The GC device and the GO device establish a P2P connection, and use a channel on the 5 GHz frequency band. The following uses several channels as examples for auxiliary description.

In a P2P scenario 1, when the GC device and the GO device perform P2P communication through the channel 149 on the 5 GHz frequency band, because each of the two electronic devices establishes only one WLAN connection, performance of the P2P connection may reach 100%, and a transmission rate is high. For example, a P2P transmission rate may be 65 MB/s.

In a P2P scenario 2, when the GC device is used as a station in the wireless local area network to access the wireless access device, a channel for communication between the GC device and the wireless access device may be the channel 36 on the 5 GHz frequency band. When the GO device is used as a STA to access the wireless access device, a channel for communication between the GO device and the wireless access device may be the channel 149 on the 5 GHz frequency band. In addition, the GC device and the GO device 200 also perform the P2P connection through the channel 149 on the 5 GHz frequency band. Two WLAN connections on the GC device are established in the intra-frequency inter-channel mode, and communication quality of the two WLAN connections on the GC device is poor. Two WLAN connections on the GO device are established on the intra-frequency co-channel, and communication quality of the two WLAN connections on the GO device is normal. In this case, the performance of the P2P connection is only 35%, and the transmission rate is low. For example, the P2P transmission rate may be 20 MB/s.

In a P2P scenario 3, when the GC device is used as a station in the wireless local area network to access the wireless access device, the channel for communication between the GC device and the wireless access device may be the channel 52 on the 5 GHz frequency band. When the GO device is used as a STA to access the wireless access device, the channel for communication between the GO device and the wireless access device may be the channel 52 on the 5 GHz frequency band. In addition, the GC device and the GO device 200 perform the P2P connection through the channel 149 on the 5 GHz frequency band. The two WLAN connections on the GC device are established in the intra-frequency inter-channel mode, and communication quality of the two WLAN connections on the GC device is poor. The two WLAN connections on the GO device are established in the intra-frequency inter-channel mode, and communication quality of the two WLAN connections on the GO device is poor. In this case, the performance of the P2P connection is only 0% to 20%, and the transmission rate is very low. For example, the P2P transmission rate may be 8 MB/s.

It can be learned from an example in FIG. 6D that the intra-frequency inter-channel mode affects P2P transmission quality, and reduces performance of the P2P connection. In the P2P connection" performance of the P2P connection when a device on either side of the transmit side/the receive side is in the intra-frequency inter-channel mode is lower than that of the P2P connection when the device is not in the intra-frequency inter-channel mode, and performance of the P2P connection when both devices on the transmit side and the receive side are in the intra-frequency inter-channel mode is lower than that of the P2P connection when a device on one of the transmit side and the receive side is in the intra-frequency inter-channel mode. In the Wi-Fi P2P scenario, a larger quantity of devices in the intra-frequency inter-channel mode indicates poorer P2P connection performance.

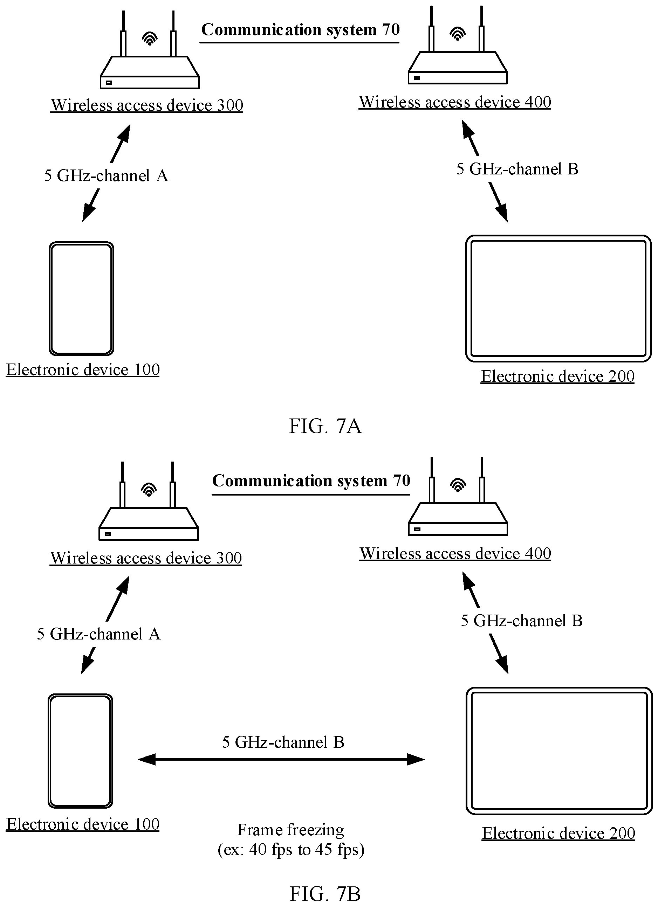

To resolve the delay problem caused by frequency switching in the DBAC mechanism, when the electronic device 100 needs to establish two WLAN connections, a channel on the 2.4 GHz frequency band and a channel on the 5 GHz frequency band in the Wi-Fi technology may be separately used. As shown in FIG. 7A to FIG. 7C, the electronic device 100, the electronic device 200, the wireless access device 300, and the wireless access device 400 may form a communication system 70.

As shown in FIG. 7A, an electronic device 100 communicates with the wireless access device 300 on the channel A on the 5 GHz frequency band, and the electronic device 200 communicates with the wireless access device 400 on the channel B on the 5 GHz frequency band. Both the channel A and the channel B are channels in the general channels, and the channel A and the channel B are not a same channel.

As shown in FIG. 7B, due to a requirement of a specified service (for example, a projection service or a file transfer service), the electronic device 100 needs to establish a WLAN direct connection to the electronic device 200. The WLAN direct connection between the electronic device 100 and the electronic device 200 is established on the channel B on the 5 GHz frequency band (generally, a channel of the WLAN direct connection is consistent with a channel used by the GO device). The two WLAN connections on the electronic device 100 are established in the intra-frequency inter-channel mode, and communication quality of the two WLAN connections on the electronic device 100 is poor. For example, in the projection scenario, when the electronic device 100 sends the projection data to the electronic device 200 for display by using the WLAN direct connection, the frame rate of the projection image displayed on the electronic device 200 ranges from 40 fps to 45 fps, and display of the projection image freezes.

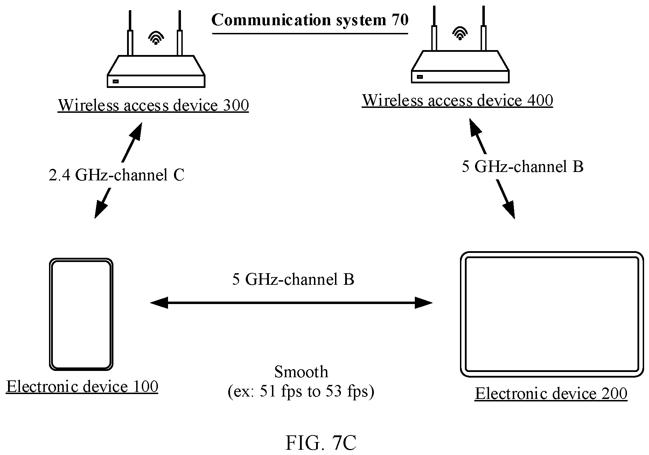

As shown in FIG. 7C, when the electronic device 100 and the electronic device 200 establish the WLAN direct connection, the channel for communication between the electronic device 100 and the wireless access device 300 may be changed to a channel C on the 2.4 GHz frequency band. In this way, an intra-frequency inter-channel problem is avoided, and a 2.4 GHz radio frequency path and a 5 GHz radio frequency path may be separately used for communication. However, this technical solution also has a disadvantage. That is, in the conventional technology, in addition to the Wi-Fi technology that can be used to work on the 2.4 GHz frequency band, there are other wireless technologies such as a Bluetooth technology and an infrared technology that can be also used to work on the 2.4 GHz frequency band. Therefore, when a Wi-Fi connection uses a channel on the 2.4 GHz frequency band, communication quality is inferior to communication quality when the Wi-Fi connection uses a channel on the 5 GHz frequency band. To ensure communication quality, the wireless access device detects, within a period of time, an access frequency band for accessing the electronic device, kicks out a device connected to the channel on the 2.4 GHz frequency band, and enables the device to be reconnected to the wireless access device through the channel on the 5 GHz frequency band. However, in this way, the wireless access device frequently disconnects and reconnects the electronic device, affecting communication quality of the electronic device.

Therefore, an embodiment of this application provides a WLAN communication method, to use a feature of a wide Wi-Fi 5 GHz frequency band. A radio frequency path in a 5 GHz high frequency band and a radio frequency path in a 5 GHz low frequency band are configured in a WLAN communication module of the electronic device 100. The radio frequency path in the 5 GHz high frequency band may include a high-frequency filter (for example, a filter whose filtering range is 5.49 GHz to 5.835 GHz) of the 5 GHz frequency band, and the radio frequency path in the 5 GHz low frequency band may include a low-frequency filter (for example, a filter whose filtering range is 5.17 GHz to 5.33 GHz) of the 5 GHz frequency band. When the electronic device 100 needs to establish two WLAN connections, the electronic device 100 may transmit and receive data through the radio frequency path in the 5 GHz high frequency band in one WLAN connection, and transmit and receive data through the radio frequency path in the 5 GHz low frequency band in the other WLAN connection. In this way, concurrency of dual radio frequency paths in 5 GHz frequency bands can be implemented, a data transmission delay can be reduced, and communication quality can be improved.

FIG. 8 is a schematic diagram of a structure of the electronic device 100.

The electronic device 100 (also referred to as the first electronic device) may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

The electronic device 100 may include a processor 810, an external memory interface 820, an internal memory 821, a universal serial bus (universal serial bus, USB) interface 830, a charging management module 840, a power management module 841, a battery 842, an antenna 1, an antenna 2, a mobile communication module 850, a wireless communication module 860, an audio module 870, a speaker 870A, a receiver 870B, a microphone 870C, a headset jack 870D, a sensor module 880, a button 890, a motor 891, an indicator 892, a camera 893, a display 894, a subscriber identity module (subscriber identity module, SIM) card interface 895, and the like. The sensor module 880 may include a pressure sensor 880A, a gyroscope sensor 880B, a barometric pressure sensor 880C, a magnetic sensor 880D, an acceleration sensor 880E, a distance sensor 880F, an optical proximity sensor 880G, a fingerprint sensor 880H, a temperature sensor 880J, a touch sensor 880K, an ambient light sensor 880L, a bone conduction sensor 880M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 810 may include one or more processing units. For example, the processor 810 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 810, and is configured to store instructions and data. In some embodiments, the memory in the processor 810 is a cache memory. The memory may store instructions or data just used or cyclically used by the processor 810. If the processor 810 needs to use the instructions or the data again, the processor may directly invoke the instructions or the data from the memory. This avoids repeated access, reduces waiting time of the processor 810, and improves system efficiency.

In some embodiments, the processor 810 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present disclosure is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 840 is configured to receive a charging input from a charger. The charger may be a wireless charger or a wired charger. In some embodiments of wired charging, the charging management module 840 may receive a charging input of a wired charger through the USB interface 830. In some embodiments of wireless charging, the charging management module 840 may receive a wireless charging input through a wireless charging coil of the electronic device 100. The charging management module 840 may further supply power to an electronic device by using the power management module 841 while charging the battery 842.

The power management module 841 is configured to connect to the battery 842, the charging management module 840, and the processor 810. The power management module 841 receives an input from the battery 842 and/or the charging management module 840, and supplies power to the processor 810, the internal memory 821, the display 894, the camera 893, the wireless communication module 860, and the like. The power management module 841 may be further configured to monitor parameters such as a battery capacity, a battery cycle count, and a battery health status (electric leakage or impedance). In some other embodiments, the power management module 841 may alternatively be disposed in the processor 810. In some other embodiments, the power management module 841 and the charging management module 840 may alternatively be disposed in a same device.

A wireless communication function of the electronic device 100 may be implemented by using the antenna 1, the antenna 2, the mobile communication module 850, the wireless communication module 860, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 850 can provide a wireless communication solution that is applied to the electronic device 100 and that includes 2G/3G/4G/5G or the like. The mobile communication module 850 may include at least one filter, a switch, a power amplifier, a low noise amplifier (low noise amplifier, LNA), and the like. The mobile communication module 850 may receive an electromagnetic wave through the antenna 1, perform processing such as filtering or amplification on the received electromagnetic wave, and transmit the electromagnetic wave to the modem processor for demodulation. The mobile communication module 850 may further amplify a signal modulated by the modem processor, and convert the signal into an electromagnetic wave for radiation through the antenna 1. In some embodiments, at least some function modules in the mobile communication module 850 may be disposed in the processor 810. In some embodiments, at least some function modules in the mobile communication module 850 may be disposed in a same component as at least some modules in the processor 810.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 870A, the receiver 870B, or the like), or displays an image or a video through the display 894. In some embodiments, the modem processor may be an independent component. In some other embodiments, the modem processor may be independent of the processor 810, and is disposed in a same component as the mobile communication module 850 or another function module.

The wireless communication module 860 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 860 may be one or more components integrating at least one communication processor module. The wireless communication module 860 receives an electromagnetic wave through the antenna 2, performs frequency modulation and filtering processing on the electromagnetic wave signal, and sends a processed signal to the processor 810. The wireless communication module 860 may further receive a to-be-sent signal from the processor 810, perform frequency modulation and amplification on the signal, and convert the signal into an electromagnetic wave for radiation through the antenna 2.

In some embodiments, in the electronic device 100, the antenna 1 and the mobile communication module 850 are coupled, and the antenna 2 and the wireless communication module 860 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 894, the application processor, and the like. The GPU is a microprocessor for image processing, and is connected to the display 894 and the application processor. The GPU is configured to: perform mathematical and geometric computation, and render an image. The processor 810 may include one or more GPUs that execute program instructions to generate or change display information.

The display 894 is configured to display an image, a video, and the like. The display 894 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 894, where N is a positive integer greater than 1.

The electronic device 100 may implement a photographing function by using the camera 893, the ISP, the video codec, the GPU, the display 894, the application processor and the like.

The ISP is configured to process data fed back by the camera 893. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 893.

The camera 893 is configured to capture a static image or a video. An optical image of an object is generated through the lens, and is projected onto the photosensitive element. The photosensitive may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 893, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 820 may be used to connect to an external storage card, for example, a micro SD card, to extend a storage capability of the electronic device 100. The external storage card communicates with the processor 810 through the external memory interface 820, to implement a data storage function. For example, files such as music and videos are stored in the external storage card.

The internal memory 821 may be configured to store computer-executable program code. The executable program code includes instructions. The processor 810 runs the instructions stored in the internal memory 821, to perform various function applications of the electronic device 100 and data processing. The internal memory 821 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 821 may include a high-speed random access memory, or may include a non-volatile memory, for example, at least one magnetic disk storage device, a flash storage device, a universal flash storage (universal flash storage, UFS), or the like.

The electronic device 100 may implement audio functions such as music playing and recording by using the audio module 870, the speaker 870A, the receiver 870B, the microphone 870C, the headset jack 870D, the application processor, and the like.

The audio module 870 is configured to convert digital audio information into an analog audio signal for output, and is also configured to convert an analog audio input into a digital audio signal.

The speaker 870A, also referred to as a "horn", is configured to convert an audio electrical signal into a sound signal.

The receiver 870B, also referred to as an "earpiece", is configured to convert an audio electrical signal into a sound signal.

The microphone 870C, also referred to as a "mike" or a "mic", is configured to convert a sound signal into an electrical signal.

The pressure sensor 880A is configured to sense a pressure signal, and can convert the pressure signal into an electrical signal. In some embodiments, the pressure sensor 880A may be disposed on the display 894. The gyroscope sensor 880B may be configured to determine a moving posture of the electronic device 100. The barometric pressure sensor 880C is configured to measure barometric pressure. The magnetic sensor 880D includes a Hall sensor, and may detect opening and closing of a flip cover by using the magnetic sensor 880D. The acceleration sensor 880E may detect accelerations in various directions (usually on three axes) of the electronic device 100. The distance sensor 880F is configured to measure a distance. The optical proximity sensor 880G may also be used in a leather case mode or a pocket mode to automatically unlock or lock the screen. The ambient light sensor 880L is configured to sense ambient light brightness. The fingerprint sensor 880H is configured to collect a fingerprint. The temperature sensor 880J is configured to detect temperature. The touch sensor 880K is also referred to as a "touch panel". The touch sensor 880K may be disposed on the display 894, and the touch sensor 880K and the display 894 constitute a touchscreen, which is also referred to as a "touch screen". The touch sensor 880K is configured to detect a touch operation performed on or near the touch sensor 880K. The touch sensor may transfer the detected touch operation to the application processor to determine a type of the touch event. Visual output related to the touch operation may be provided through the display 894. In some other embodiments, the touch sensor 880K may also be disposed on a surface of the electronic device 100 at a location different from that of the display 894. The bone conduction sensor 880M may obtain a vibration signal. The button 890 includes a power button, a volume button, and the like. The motor 898 may generate a vibration prompt. The indicator 892 may be an indicator light, and may be configured to indicate a charging status and a power change, or may be configured to indicate a message, a missed call, a notification, and the like. The SIM card interface 895 is configured to connect to a SIM card.

FIG. 9 is a schematic diagram of a hardware structure of the electronic device 200.

As shown in FIG. 9, the electronic device 200 (also referred to as a second electronic device) may include a processor 901, a memory 902, a wireless communication processing module 903, an antenna 905, and a power switch 906.

The processor 901 may be configured to: read and execute computer-readable instructions. During specific implementation, the processor 901 may mainly include a controller, an arithmetic unit, and a register. The controller is mainly responsible for decoding instructions and sending a control signal for an operation corresponding to the instructions. The arithmetic unit is mainly responsible for storing a register operand, an intermediate operation result, and the like that are temporarily stored during instruction execution. In a specific implementation, a hardware architecture of the processor 901 may be an application-specific integrated circuit (ASIC) architecture, an MIPS architecture, an ARM architecture, an NP architecture, or the like.

In some embodiments, the processor 901 may be configured to: parse a signal received by the wireless communication module 903 and/or a wired LAN communication processing module 907, and demodulate the signal. The processor 901 may respond based on the parsing result, and perform a corresponding operation, for example, display a corresponding web page. In some embodiments, the processor 901 may be further configured to generate a signal sent by the wireless communication module 903 to the outside, for example, a Bluetooth signal.

The memory 902 is coupled to the processor 901, and is configured to store various software programs and/or a plurality of sets of instructions. In a specific implementation, the memory 902 may include a high-speed random access memory, and may further include a non-volatile memory, for example, one or more magnetic disk storage devices, a flash device, or another non-volatile solid-state storage device. The memory 902 may store an operating system, for example, an embedded operating system such as uCOS, VxWorks, or RTLinux. The memory 902 may further store a communication program, and the communication program may be used to communicate with the electronic device 100 or another device.

The wireless communication module 903 may include a WLAN communication module 904 or others. Possibly, the WLAN communication module 904 may be integrated with another communication module (for example, a Bluetooth communication module). The WLAN communication module 904 may listen to a signal transmitted by another device (for example, the electronic device 100), for example, a measurement signal or a scanning signal, and may send a response signal, for example, a measurement response or a scanning response, so that the another device (for example, the electronic device 100) may discover the electronic device 200, and establish a wireless communication connection to the another device (for example, the electronic device 100) by using one or more of a WLAN or Bluetooth, or another near field communication technology, to transmit data.

In some other embodiments, one or more of the WLAN communication modules 904 may also transmit a signal, for example, broadcast a sounding signal or a beacon signal, so that another device (for example, the electronic device 100) can discover the electronic device 200, and establish a wireless communication connection to the another device (for example, the electronic device 100) by using the WLAN or another near field communication technology, to transmit data.

The antenna 905 may be configured to transmit and receive an electromagnetic wave signal. Antennas of different communication modules may be multiplexed, or may be independent of each other, to improve antenna utilization.

The power switch 906 may be configured to control a power supply to supply power to the electronic device 200.

Optionally, the hardware structure of the electronic device 200 may include the wired LAN communication processing module 907. The wired LAN communication processing module 907 may be connected to a switch, a wireless access device, or another network device by using a cable, to join a local area network.

It should be noted that the electronic device 200 shown in FIG. 9 is merely an implementation of this embodiment of this application. In actual application, the device may further include more or fewer components. This is not limited herein.

FIG. 10 is a schematic diagram of a hardware structure of the wireless access device 300.

As shown in FIG. 10, the wireless access device 300 may include a processor 1001, a memory 1002, a WLAN communication module 1003, and an antenna 1004. Optionally, the wireless access device 300 may further include a wired local area network (local area network, LAN) communication processing module 1005.

The processor 1001 may be configured to: read and execute computer-readable instructions. During specific implementation, the processor 1001 may mainly include a controller, an arithmetic unit, and a register. The controller is mainly responsible for decoding instructions and sending a control signal for an operation corresponding to the instructions. The arithmetic unit is mainly responsible for storing a register operand, an intermediate operation result, and the like that are temporarily stored during instruction execution. In a specific implementation, a hardware architecture of the processor 1001 may be an application-specific integrated circuit (ASIC) architecture, an MIPS architecture, an ARM architecture, an NP architecture, or the like. The processor 1001 is mainly responsible for running of the wireless access device 300.

The memory 1002 is coupled to the processor 1001, and is configured to store various software programs and/or a plurality of groups of instructions. In a specific implementation, the memory 1002 may include a high-speed random access memory, and may further include a non-volatile memory, for example, one or more magnetic disk storage devices, a flash device, or another non-volatile solid-state storage device. The memory 1002 may store an operating system, for example, an embedded operating system such as uCOS, VxWorks, or RTLinux. The memory 1002 may further store a communication program, and the communication program may be used to communicate with the electronic device 100 or another device. The memory 1002 may further store a current configuration, a routing table, and a forwarding table. The routing table may be used to store routing information. The routing table is usually maintained by a routing protocol and a routing table management module, and includes more information (a network address, a next hop, a timeout time, and the like). The forwarding table may be generated based on the routing table, and is used by a router during actual forwarding. The wireless access device 300 may send a data packet to a next-hop device based on the forwarding table.

The WLAN communication module 1003 may be configured to modulate and demodulate an electromagnetic wave signal, and the WLAN communication module 1003 may convert information and instructions sent by the processor 1001 into the electromagnetic wave signal. The received electromagnetic wave signal is converted into a digital signal, and the digital signal is sent to the processor 1001 for processing.

The antenna 1004 may be configured to transmit and receive an electromagnetic wave signal. Antennas of different communication modules may be multiplexed, or may be independent of each other, to improve antenna utilization.

The wired LAN communication processing module may include one or more LAN physical interfaces, and the one or more LAN physical interfaces may be configured for another electronic device to establish a connection to the wireless access device 300 by using a network cable.

The wireless access device 300 may further include a wired wide area network (WAN) communication processing module. The wired wide area network (WAN) communication processing module may include a WAN physical interface. The WAN physical interface may be configured to connect the wireless access device 300 to the Internet.

It should be noted that the wireless access device 300 shown in FIG. 10 is merely an implementation of this embodiment of this application. In actual application, the device may further include more or fewer components. This is not limited herein. In this embodiment of this application, for a hardware structure of the wireless access device 400, refer to the descriptions of the wireless access device 300 in the embodiment shown in FIG. 10. Details are not described again. The wireless access device 300, the wireless access device 400, and another electronic device having the hardware structure shown in FIG. 10 may be collectively referred to as a wireless access device.

The following describes a radio frequency path in the electronic device 100 in embodiments of this application.

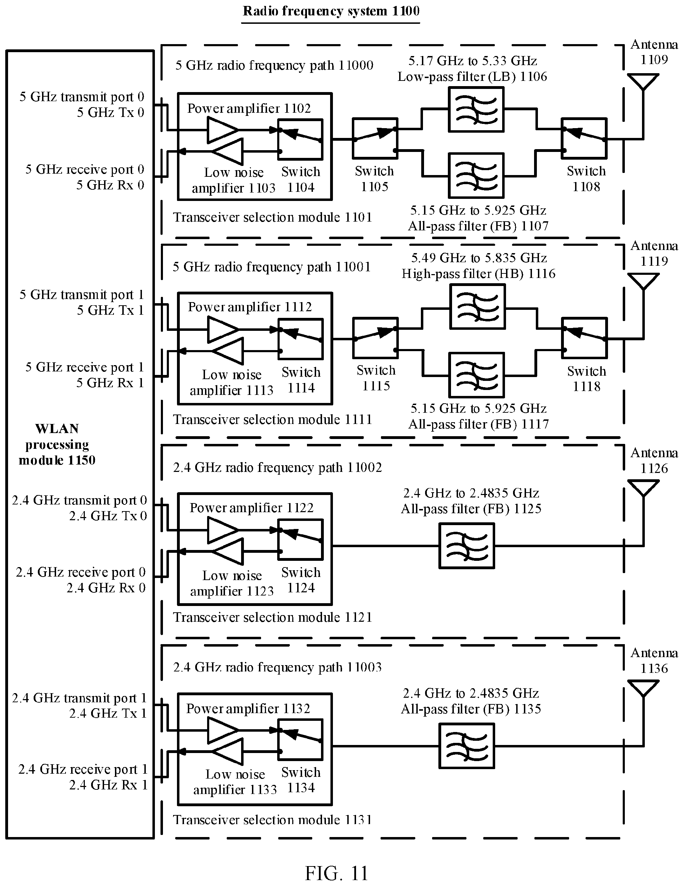

FIG. 11 is a schematic diagram of a radio frequency system 1100 according to an embodiment of this application. In this embodiment of this application, the radio frequency system 1100 may be applied to the electronic device 100. The radio frequency system 1100 may include but is not limited to four radio frequency paths, a WLAN processing module 1150, and an antenna. The radio frequency paths are respectively a 5 GHz radio frequency path 11000 (also referred to as a first radio frequency path), a 5 GHz radio frequency path 11001 (also referred to as a second radio frequency path), a 2.4 GHz radio frequency path 11002, and a 2.4 GHz radio frequency path 11003. Each radio frequency path includes a transceiver selection module and a filter. The transceiver selection module may adjust, based on a control signal of the WLAN processing module, the radio frequency path to be in a transmit state or a receive state. The WLAN processing module 1150, the radio frequency path, a Wi-Fi driver, all Wi-Fi protocols, and the like may form a WLAN communication module.

When the radio frequency path works in the transmit state, a digital signal output by a TX signal processing unit of the WLAN processing module is converted into a low-frequency analog signal through digital-to-analog conversion, and then the low-frequency analog signal is modulated onto a carrier by using a frequency mixer. A carrier signal is generated by a phase locked loop. A modulated high-frequency signal is amplified by a power amplifier, and then transmitted through the antenna. When the radio frequency path works in the receive state, the high-frequency signal received by the antenna is amplified by a low noise amplifier, and then down-converted into a low-frequency analog signal by using the frequency mixer. Through analog-to-digital conversion, the low-frequency analog signal is converted into a digital signal, and then transmitted to an RX signal processing unit for signal receiving processing.

The 5 GHz radio frequency path 11000 (the first radio frequency path) may include a transceiver selection module 1101, a switch 1105, a low-pass filter (low band, LB) 1106, an all-pass filter (full band, FB) 1107, and a switch 1108. The low-pass filter 1106 is also referred to as a low-pass filter, and the all-pass filter 1107 is also referred to as a first all-pass filter. The transceiver selection module 1101 includes accessories related to transmitting and receiving. For example, the transceiver selection module 1101 may include a radio frequency power amplifier 1102, a low noise amplifier 1103, and a switch 1104. The radio frequency power amplifier 1102 may obtain sufficiently large radio frequency output power. The low noise amplifier 1103 may be used as a high-frequency or intermediate-frequency preamplifier of various radio receivers, and an amplification circuit of a high-sensitivity electronic detection device. The switch 1104 may be a single-pole double-throw switch, and may be configured to switch a working state (including the transmit state and the receive state) of the radio frequency path. Both the switch 1105 and the switch 1108 may be single-pole double-throw switches, and may be configured to switch a filter on the radio frequency path. The switch 1104, the switch 1105, and the switch 1108 may all be controlled by the WLAN processing module 1150, or controlled by the application processor. Optionally, the switch 1105 and the switch 1108 may be simultaneously switched upwards or switched downwards, that is, the two switches may use a same controller.

In a possible implementation, the switch 1105 may be replaced with a line on which one end is connected to a right side of the switch 1104 and the other end is separately connected to a left side of the low-pass filter 1106 and a left side of the all-pass filter 1107. The switch 1108 may be configured to switch a filter on the radio frequency path. The switch 1108 may be controlled by the WLAN processing module 1150, or controlled by the application processor, and is switched upwards/downwards to switch the filter.

In a possible implementation, the switch 1108 may be replaced with a line on which one end is connected to an antenna 1109 and the other end is separately connected to a right side of the low-pass filter 1106 and a right side of the all-pass filter 1107. The switch 1105 may be configured to switch a filter on the radio frequency path. The switch 1105 may be controlled by the WLAN processing module 1150, or controlled by the application processor, and is switched upwards/downwards to switch the filter.

The low-pass filter 1106 is a filter that may enable a signal at a useful frequency to pass through, and suppress a signal at a useless frequency at the same time. The low-pass filter 1106 may be configured to filter out a high-frequency signal. For example, the low-pass filter enables a signal from 5.17 GHz to 5.33 GHz to pass through, and filters out a signal in another frequency range.

The all-pass filter 1107 is a filter that may enable a signal at a useful frequency to pass through, and suppress a signal at a useless frequency at the same time, for example, may enable a signal in a frequency range of 5.15 GHz to 5.925 GHz to pass through, and filter out a signal at another frequency.

The 5 GHz radio frequency path 11001 (the second radio frequency path) may include a transceiver selection module 1111, a switch 1115, a high-pass filter (highband, HB) 1116, an all-pass filter (full band, FB) 1117, and a switch 1118. The high-pass filter 1116 is also referred to as a high-pass filter, and the all-pass filter 1117 is also referred to as a second all-pass filter. The transceiver selection module 1111 includes accessories related to transmitting and receiving. For example, the transceiver selection module 1111 may include a radio frequency power amplifier 1112, a low noise amplifier 1113, and a switch 1114. For the transceiver selection module 1111, refer to the transceiver selection module 1101. Details are not described herein again.

Both the switch 1115 and the switch 1118 may be single-pole double-throw switches, and may be configured to switch a filter on the radio frequency path. Both switches may be controlled by the WLAN processing module 1150, or controlled by the application processor. Optionally, the switch 1115 and the switch 1118 may be simultaneously switched upwards or switched downwards, that is, the two switches may use a same controller. For descriptions of the switch 1115, refer to the switch 1105. For descriptions of the switch 1118, refer to the switch 1108.

The high-pass filter 1116 is a filter that may enable a signal at a useful frequency to pass through, and suppress a signal at a useless frequency at the same time. The high-pass filter 1116 may be configured to filter out a low frequency signal. For example, the high-pass filter enables a signal from 5.49 GHz to 5.835 GHz to pass through, and filters out a signal in another frequency range. The all-pass filter 1117 is a filter that may enable a signal at a useful frequency to pass through, and suppress a signal at a useless frequency at the same time, for example, may enable a signal in a frequency range of 5.15 GHz to 5.925 GHz to pass through, and filter out a signal at another frequency.

The 2.4 GHz radio frequency path 110021 may include a transceiver selection module 1121 and an all-pass filter 1125. The transceiver selection module 1121 includes components such as a power amplifier 1122, a low noise amplifier 1123, and a switch 1124. For descriptions of the 2.4 GHz radio frequency path 110021, refer to the 2.4 GHz radio frequency path 110020. Details are not described herein again.

The antenna 1109 (also referred to as a first antenna), an antenna 1119 (also referred to as a second antenna), an antenna 1126, and an antenna 1136 may be configured to transmit and receive an electromagnetic wave signal.

It should be noted that the radio frequency system 1100 shown in FIG. 11 is merely an implementation of this embodiment of this application. In actual application, the radio frequency system 1100 may further include more or fewer components. This is not limited herein.

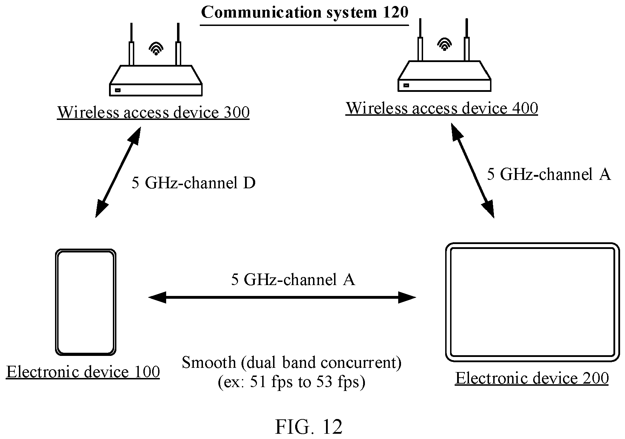

FIG. 12 is a diagram of an application scenario of a WLAN communication method according to an embodiment of this application.

As shown in FIG. 12, the electronic device 100 uses the WLAN communication method provided in this application. After the scenario in FIG. 7B, the electronic device 100 enables a low frequency + high frequency mode of a dual 5 GHz frequency band. When establishing a communication connection, the electronic device 200 and the wireless access device 400 use the channel A in the general channels on the 5 GHz frequency band. In this case, when establishing a WLAN direct connection, the electronic device 100 and the electronic device 200 also use the channel A. In addition, the electronic device 100 enables the low frequency + high frequency mode of the dual 5 GHz frequency band. If the channel A is a high frequency channel (for example, the channel 149) on the 5 GHz frequency band, the electronic device 100 may perform WLAN communication with the electronic device 200 through the radio frequency path 11001, and perform WLAN communication with the wireless access device 300 through the radio frequency path 11000. If the channel A is a low frequency channel (for example, the channel 36) on the 5 GHz frequency band, the electronic device 100 may perform WLAN communication with the electronic device 200 through the radio frequency path 11000, and perform WLAN communication with the wireless access device 300 through the radio frequency path 11001. The low frequency channel herein is a channel in a range of 5.17 GHz to 5.33 GHz, and the high frequency channel herein is a channel in a range of 5.49 GHz to 5.835 GHz.

Because the electronic device uses two radio frequency paths in the 5 GHz frequency band, and the two radio frequency paths use filters of two frequency bands, only a signal that is allowed to pass through is received and transmitted. The signal that is allowed to pass through is a signal that can pass through the filter. In this way, two different paths may be physically divided, and the two radio frequency paths work concurrently and do not interfere with each other, to save time for frequency switching.

The following describes a WLAN communication method provided in embodiments of this application.

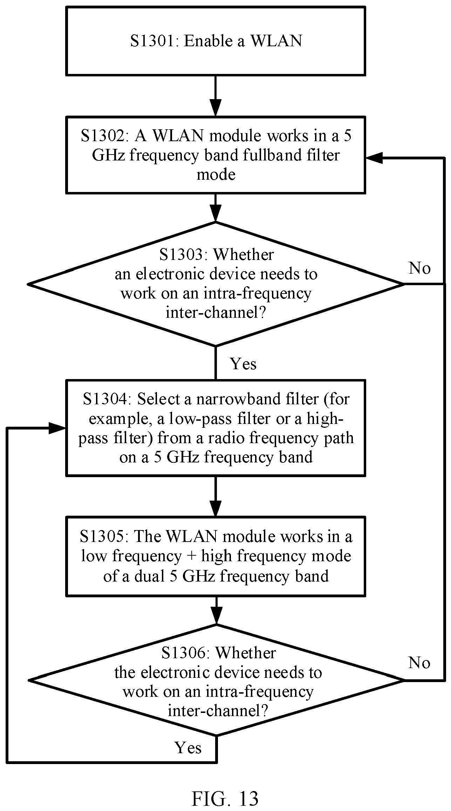

FIG. 13 shows a WLAN communication method according to an embodiment of this application. The method may be applied to a communication system including the electronic device 100.

As shown in FIG. 13, the method includes the following steps.

S1301: Enable a WLAN communication module.

That the electronic device 100 enables a WLAN function and establishes a WLAN connection to another electronic device may means that the electronic device 100 establishes a WLAN connection to a wireless access device (for example, the wireless access device 300), or establishes a WLAN direct connection to a GO device (for example, the electronic device 200).

S1302: The WLAN communication module works in a 5 GHz frequency band full band filter mode.

A full band filter is used on both 5 GHz radio frequency paths of the electronic device 100. To be specific, the electronic device 100 switches a switch of the radio frequency path to the full band filter (for example, the switch 1105, the switch 1108, the switch 1115, and the switch 1118 in FIG. 11 are all switched downwards). In this case, the electronic device 100 works normally, and the electronic device 100 may control both 5 GHz radio frequency paths to transmit and receive a signal (for example, the WLAN communication module of the electronic device 100 works in a multiple-input multiple-output (multiple-input multiple-output, MIMO) mode in the 5 GHz frequency band). Alternatively, the electronic device 100 may control only one 5 GHz radio frequency path to transmit and receive a signal.

S1303: The electronic device 100 detects whether the WLAN communication module needs to work in an intra-frequency inter-channel mode.

In this embodiment of this application, the low frequency + high frequency mode of the dual 5 GHz frequency band means that the electronic device 100 switches upwards the switch 1105 and the switch 1108 of the 5 GHz radio frequency path 11000 of the radio frequency system 1100, to select the low-pass filter, and switches upwards the switches 1115 and 1118 of the 5 GHz radio frequency path 11001, to select the high-pass filter. When transmit and receive frequencies of the two paths are respectively in two frequency band ranges (low frequency + high frequency), due to a feature of a wide 5 GHz frequency band, two filters of the 5 GHz radio frequency paths may physically isolate two communication paths, and the two paths may work concurrently without interference.

To determine whether the electronic device needs to work in the intra-frequency inter-channel mode, in this embodiment of this application, the following two cases are listed. When the electronic device 100 encounters the following cases, the electronic device 100 determines that the electronic device 100 needs to work in the intra-frequency inter-channel mode. The electronic device 100 uses the low frequency + high frequency mode of the dual 5 GHz frequency band. Details are as follows.

Case 1: The electronic device 100 establishes a communication connection to the wireless access device. In this case, when detecting that the electronic device 100 establishes a projection connection to the electronic device 200 (establishing the projection connection between the electronic device 100 and the electronic device 200 may be referred to as a first operation), the electronic device 100 determines that the electronic device 100 is to work in the intra-frequency inter-channel mode, and the electronic device 100 controls a filter of the 5 GHz radio frequency path to be switched to a narrow-band filter, and switches a working mode to the low frequency + high frequency mode of the dual 5 GHz frequency band.

Case 2: The electronic device 100 establishes a projection connection to the electronic device 200. In this case, when detecting that the electronic device 100 establishes a Wi-Fi connection to the wireless access device (establishing the Wi-Fi connection between the electronic device 100 and the wireless access device may be referred to as a second operation), the electronic device 100 determines that the electronic device 100 is to work in the intra-frequency inter-channel mode, and the electronic device 100 controls a filter of the 5 GHz radio frequency path to be switched to a narrow-band filter, and switches a working mode to the low frequency + high frequency mode of the dual 5 GHz frequency band.

When detecting any one of the foregoing cases (which may also be referred to as meeting a preset condition), the electronic device 100 performs step S1304. If neither of the foregoing two cases is met, the electronic device 100 does not change the working mode, and returns to step S1302. In the scenario, a switching requirement may be detected by using an application processor, or may be detected by using a WLAN processing module.

In this embodiment of this application, that the electronic device 100 detects that the WLAN communication module needs to work in the intra-frequency inter-channel mode may also be described as that the first electronic device detects that the first electronic device meets the preset condition. The preset condition includes that the first electronic device establishes a Wi-Fi connection to the wireless access device through a first channel on the Wi-Fi 5 GHz frequency band, and the first electronic device receives the first operation of projection to a second electronic device. Alternatively, the preset condition includes that the first electronic device establishes a Wi-Fi direct connection to a second electronic device through a second channel on the Wi-Fi 5 GHz frequency band, and the first electronic device receives the second operation of establishing the Wi-Fi connection to the wireless access device.

In a possible implementation, the electronic device 100 may determine whether the electronic device 100 already works in the intra-frequency inter-channel mode (that is, determine whether the electronic device 100 meets the preset condition). The electronic device 100 has established a WLAN communication connection to the wireless access device, and the electronic device 100 has established a Wi-Fi P2P connection to the electronic device 200. When the electronic device 100 detects that a channel used for communication between the electronic device 100 and the electronic device 200 is different from a channel used for communication between the electronic device 100 and the wireless access device, the electronic device 100 determines that the electronic device 100 already works in the intra-frequency inter-channel mode (the electronic device 100 detects that the electronic device 100 meets the preset condition), and the electronic device 100 needs to enable the low frequency + high frequency mode of the dual 5 GHz frequency band. In other words, the electronic device 100 detects that communication is being performed on two different channels, and therefore, determines that the electronic device 100 needs to work in the intra-frequency inter-channel mode. Then, the electronic device 100 controls the filter of the 5 GHz radio frequency path to be switched to the narrow-band filter, and switches the working mode to the low frequency + high frequency mode of the dual 5 GHz frequency band. The preset condition includes that the first electronic device establishes the Wi-Fi connection to the wireless access device through the first channel on the Wi-Fi 5 GHz frequency band, and the first electronic device establishes the Wi-Fi direct connection to the second electronic device through the second channel on the Wi-Fi 5 GHz frequency band.

S1304: The electronic device 100 selects the narrow-band filter.

When the electronic device 100 determines that the electronic device needs to work in the intra-frequency inter-channel mode, filter selection switches (for example, the switch 1105 and the switch 1108 in FIG. 11) of the 5 GHz radio frequency path are placed at two narrow-band filters. In the radio frequency system 1100 shown in FIG. 11, two filter circuits LB and HB are selected. Two narrow-band filters can convert signals to be in fixed frequency ranges. The signals in the two frequency ranges do not interfere with each other and can work at the same time.

S1305: The electronic device 100 works in the low frequency + high frequency mode of the dual 5 GHz frequency band.

The electronic device 100 controls the two radio frequency paths to work on different channels. Because frequencies of signals are modulated, the two paths separately work on a low frequency band channel and a high frequency band channel, and the two radio frequency paths work independently and do not interfere with each other. A delay of a running application is lower than that when the low frequency + high frequency mode of the dual 5 GHz frequency band is not enabled, and display is smoother. The electronic device 100 needs to determine a 5 GHz radio frequency path used for a WLAN communication connection between the electronic device 100 and the wireless access device, and a 5 GHz radio frequency path used for a WLAN direct connection (a projection connection) between the electronic device 100 and the electronic device 200.

The electronic device 100 detects that the electronic device 100 is in the scenario of Case 1 described in step S1303, that is, the first electronic device establishes the Wi-Fi connection to the wireless access device through the first channel on the Wi-Fi 5 GHz frequency band, and the first electronic device receives the first operation of projection to the second electronic device.

When detecting that a frequency of the first channel falls within a filtering frequency range of the low-pass filter, in response to the first operation, the first electronic device is controlled to establish the Wi-Fi direct connection to the second electronic device through the second channel on the Wi-Fi 5 GHz frequency band. A frequency of the second channel falls within a filtering frequency range of the high-pass filter. The first electronic device controls a first radio frequency path to filter, by using the low-pass filter, a signal received by a first antenna on the first channel or a signal to be sent by the first antenna on the first channel, and controls a second radio frequency path to filter, by using the high-pass filter, a signal received by a second antenna on the second channel or a signal to be sent by the second antenna on the second channel.

When detecting that the frequency of the first channel falls within the filtering frequency range of the high-pass filter, in response to the first operation, the first electronic device is controlled to establish the Wi-Fi direct connection to the second electronic device through the second channel on the Wi-Fi 5 GHz frequency band. The frequency of the second channel falls within the filtering frequency range of the low-pass filter. The first electronic device controls the second radio frequency path to filter, by using the high-pass filter, a signal received by the second antenna on the first channel or a signal to be sent by the second antenna on the first channel, and controls the first radio frequency path to filter, by using the low-pass filter, a signal received by the first antenna on the second channel or a signal to be sent by the first antenna on the second channel.

The foregoing process is described in detail in this embodiment of this application.

When the electronic device 100 has established the WLAN communication connection to the wireless access device, and the electronic device 100 detects that the electronic device 100 establishes the projection connection to the electronic device 200, the electronic device 100 may be enabled to work in the low frequency + high frequency mode of the dual 5 GHz frequency band in the following two manners.
(1) When the electronic device 100 detects an operation of projection from the electronic device 100 to the electronic device 200, the electronic device 100 may obtain a frequency range of a channel for communication between the electronic device 100 and the wireless access device.

When the electronic device 100 detects that the obtained frequency range of the channel for communication between the electronic device 100 and the wireless access device is from 5.17 GHz to 5.33 GHz, the electronic device 100 may switch a filter of the radio frequency path in the 5 GHz frequency band to the narrow-band filter, and the electronic device 100 communicates with the wireless access device through a radio frequency path (for example, the radio frequency path 11000) having the low-pass filter. The electronic device 100 sends a frequency range (5.49 GHz to 5.835 GHz) of the high-pass filter to the electronic device 200, and a frequency range of a channel of the projection connection established between the electronic device 100 and the electronic device 200 is from 5.49 GHz to 5.835 GHz. The electronic device 100 may communicate with the electronic device 200 through a radio frequency path (for example, the radio frequency path 11001) having the high-pass filter.

When the electronic device 100 detects that the obtained frequency range of the channel for communication between the electronic device 100 and the wireless access device is from 5.49 GHz to 5.835 GHz, the electronic device 100 may switch a filter of the radio frequency path in the 5 GHz frequency band to the narrow-band filter, and the electronic device 100 communicates with the wireless access device through a radio frequency path (for example, the radio frequency path 11001) having the high-pass filter. The electronic device 100 sends the frequency range (5.17 GHz to 5.33 GHz) of the low-pass filter to the electronic device 200, and the frequency range of the channel of the projection connection established between the electronic device 100 and the electronic device 200 is from 5.17 GHz to 5.33 GHz. The electronic device 100 may communicate with the electronic device 200 through the radio frequency path (for example, the radio frequency path 11000) having the low-pass filter.

For example, the channel obtained by the electronic device 100 for communication between the electronic device 100 and the wireless access device is the channel 36, and a frequency range of the channel 36 is from 5.17 GHz to 5.33 GHz. When the electronic device 100 switches the filter of the radio frequency path in the 5 GHz frequency band to the narrow-band filter, the electronic device 100 communicates with the wireless access device through the 5 GHz radio frequency path 11000 shown in FIG. 11 (in this case, a filter used by the 5 GHz radio frequency path 11000 is the low-pass filter). When the electronic device 100 and the electronic device 200 establish the WLAN direct connection, only the radio frequency path 11001 shown in FIG. 11 can be used (in this case, a filter used by the 5 GHz radio frequency path 11001 is the high-pass filter).

(2) When the electronic device 100 detects an operation of projection from the electronic device 100 to the electronic device 200, the electronic device 100 may obtain a frequency range of a channel for communication between the electronic device 100 and the wireless access device.

When the electronic device 100 detects that the obtained frequency range of the channel for communication between the electronic device 100 and the wireless access device is from 5.17 GHz to 5.33 GHz, the electronic device 100 may communicate with the wireless access device through the radio frequency path (for example, the 5 GHz radio frequency path 11000) having the low-pass filter when switching the filter of the 5 GHz radio frequency path to the narrow-band filter.

The electronic device 100 may obtain a frequency range of a channel for communication between the electronic device 200 and the wireless access device.

When the electronic device 100 detects that the frequency range of the channel for communication between the electronic device 200 and the wireless access device is from 5.17 GHz to 5.33 GHz, the electronic device 100 determines that the electronic device 100 needs to establish the WLAN direct connection to the electronic device 200 through a 5 GHz radio frequency path (for example, the 5 GHz radio frequency path 11000) having the low-pass filter. The electronic device 100 may disconnect the WLAN communication connection to the wireless access device, and then establish a WLAN communication connection to the wireless access device through the channel with a frequency range from 5.49 GHz to 5.835 GHz. In other words, the electronic device 100 communicates with the wireless access device through a 5 GHz radio frequency path (for example, the 5 GHz radio frequency path 11001) including the high-pass filter. The electronic device 100 communicates with the electronic device 200 through a 5 GHz radio frequency path (for example, the 5 GHz radio frequency path 11000) including the low-pass filter.

For example, the channel for communication between the electronic device 100 and the wireless access device is the channel 36, and the channel for communication between the electronic device 200 and the wireless access device is the channel 40. After the electronic device 100 controls the filter of the 5 GHz radio frequency path to be switched to the narrow-band filter, the electronic device 100 communicates with the wireless access device through the 5 GHz radio frequency path (for example, the 5 GHz radio frequency path 11000) including the low-pass filter. If the electronic device 100 determines that the electronic device 100 may communicate with the electronic device 200 through the 5 GHz radio frequency path (for example, the 5 GHz radio frequency path 11000) including the low-pass filter, the electronic device 100 disconnects the WLAN communication connection between the electronic device 100 and the wireless access device. The electronic device 100 may switch a channel for communication between the electronic device 100 and the wireless access device, for example, the channel 149, so that a frequency of the channel for communication between the electronic device 100 and the wireless access device falls within a frequency range that can pass through the 5 GHz radio frequency path including the high-pass filter. Then, the electronic device 100 communicates with the electronic device 200 through the 5 GHz radio frequency path (for example, the 5 GHz radio frequency path 11000) including the low-pass filter.

When the electronic device 100 detects that the frequency range of the channel for communication between the electronic device 200 and the wireless access device is from 5.49 GHz to 5.835 GHz, the electronic device 100 determines that the electronic device 100 needs to establish the WLAN direct connection to the electronic device 200 through the 5 GHz radio frequency path (for example, the 5 GHz radio frequency path 11001) including the high-pass filter. The electronic device 100 communicates with the electronic device 200 through the 5 GHz radio frequency path (for example, the 5 GHz radio frequency path 11001) including the high-pass filter.

For example, the channel for communication between the electronic device 100 and the wireless access device is the channel 149, and the channel for communication between the electronic device 200 and the wireless access device is the channel 40. After the electronic device 100 controls the filter of the 5 GHz radio frequency path to be switched to the narrow-band filter, the electronic device 100 communicates with the wireless access device through the 5 GHz radio frequency path (for example, the 5 GHz radio frequency path 11001) including the high-pass filter. The electronic device 100 determines that the electronic device 100 may communicate with the electronic device 200 through the 5 GHz radio frequency path (for example, the 5 GHz radio frequency path 11000) including the low-pass filter. The electronic device 100 may not perform a switching operation on the 5 GHz radio frequency path, and the electronic device 100 continues to communicate with the wireless access device through the 5 GHz radio frequency path (for example, the 5 GHz radio frequency path 11001) including the high-pass filter. The electronic device 100 may communicate with the electronic device 200 through the 5 GHz radio frequency path (for example, the 5 GHz radio frequency path 11000) including the low-pass filter.

When the electronic device 100 detects that the electronic device 200 does not establish a connection to the wireless access device, or the channel for communication between the electronic device 200 and the wireless access device is in a 2.4 GHz frequency band, or the channel for communication between the electronic device 200 and the wireless access device is a preset channel, the electronic device 100 communicates with the electronic device 200 through an unoccupied 5 GHz radio frequency path. For example, in the radio frequency system 1100 shown in FIG. 11, when the electronic device 100 controls the filter of the 5 GHz radio frequency path to be switched to the narrow-band filter, the electronic device 100 communicates with the wireless access device through the 5 GHz radio frequency path 11001. Then, when the electronic device 100 establishes the WLAN direct connection to the electronic device 200, the electronic device 100 communicates with the electronic device 200 through the 5 GHz radio frequency path 11000.

When the electronic device 100 detects that the obtained frequency range of the channel for communication between the electronic device 100 and the wireless access device is from 5.49 GHz to 5.835 GHz, the electronic device 100 may switch the filter of the 5 GHz radio frequency path to the narrow-band filter, and the electronic device 100 communicates with the wireless access device through the radio frequency path (for example, 5 GHz radio frequency path 11001) having the high-pass filter.

The electronic device 100 may obtain the frequency range of the channel for communication between the electronic device 200 and the wireless access device.

When the electronic device 100 detects that the frequency range of the channel for communication between the electronic device 200 and the wireless access device is from 5.17 GHz to 5.33 GHz, the electronic device 100 determines that the electronic device 100 needs to establish the WLAN direct connection to the electronic device 200 through the 5 GHz radio frequency path (for example, the 5 GHz radio frequency path 11000) having the low-pass filter. The electronic device 100 communicates with the electronic device 200 through the 5 GHz radio frequency path (for example, the 5 GHz radio frequency path 11000) including the low-pass filter.

When the electronic device 100 detects that the frequency range of the channel for communication between the electronic device 200 and the wireless access device is from 5.49 GHz to 5.835 GHz, the electronic device 100 determines that the electronic device 100 needs to establish the WLAN direct connection to the electronic device 200 through the 5 GHz radio frequency path (for example, the 5 GHz radio frequency path 11001) including the high-pass filter. The electronic device 100 may disconnect the WLAN communication connection to the wireless access device, and then establish the WLAN communication connection to the wireless access device through the channel with the frequency range from 5.17 GHz to 5.33 GHz. In other words, the electronic device 100 communicates with the wireless access device through the 5 GHz radio frequency path (for example, the 5 GHz radio frequency path 11000) including the low-pass filter. The electronic device 100 communicates with the electronic device 200 through the 5 GHz radio frequency path (for example, the 5 GHz radio frequency path 11001) including the high-pass filter.

When the electronic device 100 detects that the electronic device 200 does not establish a connection to the wireless access device, or the channel for communication between the electronic device 200 and the wireless access device is in a 2.4 GHz frequency band range, or the channel for communication between the electronic device 200 and the wireless access device is a preset channel, the electronic device 100 communicates with the electronic device 200 through the unoccupied 5 GHz radio frequency path.

In a possible implementation, the first electronic device establishes the Wi-Fi direct connection to the second electronic device through the second channel on the Wi-Fi 5 GHz frequency band, and the first electronic device receives the second operation of establishing the Wi-Fi connection to the wireless access device.

When detecting that the frequency of the second channel falls within the filtering frequency range of the low-pass filter, in response to the second operation, the first electronic device is controlled to establish the Wi-Fi connection to the second electronic device through the first channel on the Wi-Fi 5 GHz frequency band. The frequency of the first channel falls within the filtering frequency range of the high-pass filter. The first electronic device may control the first radio frequency path to filter, by using the low-pass filter, the signal received by the first antenna on the second channel or the signal to be sent by the first antenna on the second channel, and control the second radio frequency path to filter, by using the high-pass filter, the signal received by the second antenna on the first channel or the signal to be sent by the second antenna on the first channel.

When detecting that the frequency of the second channel falls within the filtering frequency range of the high-pass filter, in response to the second operation, the first electronic device is controlled to establish the Wi-Fi connection to the second electronic device through the first channel on the Wi-Fi 5 GHz frequency band. The frequency of the first channel falls within the filtering frequency range of the low-pass filter. The first electronic device may control the first radio frequency path to filter, by using the low-pass filter, the signal received by the first antenna on the first channel or the signal to be sent by the first antenna on the first channel, and control the second radio frequency path to filter, by using the high-pass filter, the signal received by the second antenna on the second channel or the signal to be sent by the second antenna on the second channel.

The foregoing process is described in detail in this embodiment of this application.

The electronic device 100 detects that the electronic device 100 has established the projection connection to the electronic device 200, and the electronic device 100 has not established the WLAN communication connection to the wireless access device in the scenario of Case 2 described in step S1303. When the electronic device 100 detects that the electronic device 100 establishes a connection to the wireless access device, the electronic device 100 may obtain a frequency range of a channel for communication between the electronic device 100 and the electronic device 200.

When the electronic device 100 detects that the frequency range of the channel for communication between the electronic device 100 and the electronic device 200 is from 5.17 GHz to 5.33 GHz, and the electronic device 100 controls the filter of the 5 GHz radio frequency path to be switched to the narrow-band filter, the electronic device 100 communicates with the electronic device 200 through the 5 GHz radio frequency path (for example, the 5 GHz radio frequency path 11000) including the low-pass filter. Then, the electronic device 100 sends the frequency range (5.49 GHz to 5.835 GHz) of the high-pass filter to the wireless access device, and the electronic device 100 establishes the WLAN communication connection to the wireless access device through the 5 GHz radio frequency path (for example, the 5 GHz radio frequency path 11001) including the high-pass filter.

When the electronic device 100 detects that the frequency range of the channel for communication between the electronic device 100 and the electronic device 200 is from 5.49 GHz to 5.835 GHz, and the electronic device 100 controls the filter of the 5 GHz radio frequency path to be switched to the narrow-band filter, the electronic device 100 communicates with the electronic device 200 through the 5 GHz radio frequency path (for example, the 5 GHz radio frequency path 11001) including the high-pass filter. Then, the electronic device 100 sends the frequency range (5.17 GHz to 5.33 GHz) of the low-pass filter to the wireless access device, and the electronic device 100 establishes the WLAN communication connection to the wireless access device through the 5 GHz radio frequency path (for example, the 5 GHz radio frequency path 11000) including the low-pass filter.

For example, the channel for communication between the electronic device 100 and the electronic device 200 is the channel 40. When the electronic device 100 detects that the electronic device 100 establishes the WLAN communication connection to the wireless access device, the electronic device 100 may obtain a frequency range of the channel 40 from 5.17 GHz to 5.33 GHz. When the electronic device 100 controls the filter of the 5 GHz radio frequency path to be switched to the narrow-band filter, the electronic device 100 communicates with the electronic device 200 through the 5 GHz radio frequency path 11000. The electronic device 100 sends the frequency range (5.49 GHz to 5.835 GHz) of the high-pass filter to the wireless access device, and the electronic device 100 establishes the WLAN communication connection to the wireless access device through the 5 GHz radio frequency path 11001.

In a possible implementation, the electronic device 100 detects that the electronic device 100 already works in the intra-frequency inter-channel mode. To be specific, the electronic device 100 detects that the electronic device 100 has established the projection connection to the electronic device 200, the electronic device 100 has established the WLAN communication connection to the wireless access device, and the electronic device 100 detects that the channel used for communication between the electronic device 100 and the electronic device 200 is different from the channel used for communication between the electronic device 100 and the wireless access device. Alternatively, the electronic device 100 detects that the electronic device 100 meets the preset condition. The preset condition includes that the first electronic device establishes the Wi-Fi connection to the wireless access device through the first channel on the Wi-Fi 5 GHz frequency band, and the first electronic device establishes the Wi-Fi direct connection to the second electronic device through the second channel on the Wi-Fi 5 GHz frequency band.

The electronic device 100 may obtain a frequency range of the second channel for communication between the electronic device 100 and the electronic device 200.

The electronic device 100 detects that a frequency of the channel for communication between the electronic device 100 and the electronic device 200 is from 5.17 GHz to 5.33 GHz (the first electronic device detects that a frequency of the second channel falls within the filtering frequency range of the low-pass filter). When switching the filter of the 5 GHz radio frequency path to the narrow-band filter, the electronic device 100 may communicate with the electronic device 200 through the 5 GHz radio frequency path (for example, the 5 GHz radio frequency path 11000) including the low-pass filter (the first electronic device controls the first radio frequency path to filter, by using the low-pass filter, the signal received by the first antenna on the second channel or the signal to be sent by the first antenna on the second channel).

The electronic device 100 may obtain the frequency range of the first channel for communication between the electronic device 100 and the wireless access device. The electronic device 100 detects that a frequency range of the channel for communication between the electronic device 100 and the wireless access device is from 5.49 GHz to 5.835 GHz (the frequency of the first channel falls within the filtering range of the high-pass filter), and the electronic device 100 communicates with the wireless access device through the 5 GHz radio frequency path (for example, the 5 GHz radio frequency path 11001) including the high-pass filter (the first electronic device controls the second radio frequency path to filter, by using the high-pass filter, the signal received by the second antenna on the first channel or the signal to be sent by the second antenna on the first channel). The electronic device 100 detects that the frequency range of the channel for communication between the electronic device 100 and the wireless access device is from 5.17 GHz to 5.33 GHz (the electronic device 100 detects that the frequency of the first channel falls within the filtering range of the low-pass filter), and the electronic device 100 may switch the channel for communication between the electronic device 100 and the wireless access device. A frequency range of a switched channel, for example, the channel 149, is from 5.49 GHz to 5.835 GHz. In other words, the first electronic device controls a channel on which the Wi-Fi connection between the first electronic device and the wireless access device is located to be switched from the first channel to a third channel on the Wi-Fi 5 GHz frequency band. A frequency of the third channel falls within the filtering range of the high-pass filter. The first electronic device may control the second radio frequency path to filter, by using the high-pass filter, a signal received by the second antenna on the third channel or a signal to be sent by the second antenna on the third channel.

The electronic device 100 detects that the frequency of the channel for communication between the electronic device 100 and the electronic device 200 is from 5.49 GHz to 5.835 GHz (the first electronic device detects that the frequency of the second channel falls within the filtering frequency range of the high-pass filter). When switching the filter of the 5 GHz radio frequency path to the narrow-band filter, the electronic device 100 may communicate with the electronic device 200 through the 5 GHz radio frequency path (for example, the 5 GHz radio frequency path 11001) including the high-pass filter (the first electronic device controls the second radio frequency path to filter, by using the high-pass filter, the signal received by the second antenna on the second channel or the signal to be sent by the second antenna on the second channel).

The electronic device 100 may obtain the frequency range of the channel for communication between the electronic device 100 and the wireless access device. The electronic device 100 detects that the frequency range of the channel for communication between the electronic device 100 and the wireless access device is from 5.17 GHz to 5.33 GHz (the first electronic device detects that the frequency of the first channel falls within the filtering range of the low-pass filter), and the electronic device 100 may communicate with the wireless access device through the 5 GHz radio frequency path (for example, the 5 GHz radio frequency path 11000) including the low-pass filter (the first electronic device controls the first radio frequency path to filter, by using the low-pass filter, the signal received by the first antenna on the first channel or the signal to be sent by the first antenna on the first channel). The electronic device 100 detects that the frequency range of the channel for communication between the electronic device 100 and the wireless access device is from 5.49 GHz to 5.835 GHz (the first electronic device detects that the frequency of the first channel falls within the filtering range of the high-pass filter), and the electronic device 100 may switch the channel for communication between the electronic device 100 and the wireless access device. A frequency range of a switched channel, for example, the channel 40, is from 5.17 GHz to 5.33 GHz. In other words, the first electronic device controls the channel on which the Wi-Fi connection between the first electronic device and the wireless access device is located to be switched from the first channel to a fourth channel on the Wi-Fi 5 GHz frequency band. A frequency of the fourth channel falls within the filtering range of the low-pass filter. The first electronic device controls the first radio frequency path to filter, by using the low-pass filter, a signal received by the first antenna on the fourth channel or a signal to be sent by the first antenna on the fourth channel.

For example, the channel for communication between the electronic device 100 and the wireless access device is the channel 36, and the channel for communication between the electronic device 100 and the electronic device 200 is the channel 40. Both frequency ranges of the channel 36 and the channel 40 are from 5.17 GHz to 5.33 GHz. When switching the filter of the 5 GHz radio frequency path to the narrow-band filter, the electronic device 100 may communicate with the electronic device 200 through the 5 GHz radio frequency path (for example, the 5 GHz radio frequency path 11000) including the low-pass filter, and communicate with the wireless access device through the 5 GHz radio frequency path (for example, the 5 GHz radio frequency path 11001) including the high-pass filter. The electronic device 100 detects that the frequency range of the channel for communication between the electronic device 100 and the wireless access device is from 5.17 GHz to 5.33 GHz, and the electronic device 100 may switch the channel for communication between the electronic device 100 and the wireless access device to the channel 149. A frequency range of the switched channel 149 is from 5.49 GHz to 5.835 GHz.

In this way, because the two channels established on the electronic device 100 are in a same filtering range (for example, the filtering range of the low-pass filter), after the narrow-band filter is used on both radio frequency paths, the channel on which the Wi-Fi connection between the electronic device 100 and the wireless access device is located may be preferentially switched to a channel in another filtering range (for example, the filtering range of the high-pass filter), to ensure that channel transmission of the Wi-Fi direct connection between the electronic device 100 and the electronic device 200 is not interfered, reduce a data transmission delay over the Wi-Fi direct connection.

In a possible implementation, the electronic device 100 may obtain a frequency of the first channel on which the electronic device 100 and the wireless access device perform the Wi-Fi connection, and a frequency of the second channel on which the electronic device 100 and the electronic device 200 perform the Wi-Fi direct connection. When both the frequency of the first channel and the frequency of the second channel fall within the filtering range (for example, 5.17 GHz to 5.33 GHz) of the low-pass filter, the electronic device 100 may communicate with the wireless access device on the first channel through the radio frequency path of the low-pass filter, and switch the Wi-Fi direct connection between the electronic device 100 and the electronic device 200 from the second channel to another channel whose frequency falls within the filtering range (for example, 5.49 GHz to 5.835 GHz) of the high-pass filter. The electronic device 100 may communicate with the electronic device 100 on the another channel through the radio frequency path of the high-pass filter.

Alternatively, when both the frequency of the first channel and the frequency of the second channel fall within the filtering range (for example, 5.49 GHz to 5.835 GHz) of the high-pass filter, the electronic device 100 may communicate with the wireless access device on the first channel through the radio frequency path of the high-pass filter, and switch the Wi-Fi direct connection between the electronic device 100 and the electronic device 200 from the second channel to another channel whose frequency falls within the filtering range (for example, 5.17 GHz to 5.33 GHz) of the low-pass filter. The electronic device 100 may communicate with the electronic device 100 on the another channel through the radio frequency path of the low-pass filter.

In this way, because the two channels established on the electronic device 100 are in a same filtering range (for example, the filtering range of the low-pass filter), after the narrow-band filter is used on both radio frequency paths, the channel on which the Wi-Fi direct connection between the electronic device 100 and the electronic device 200 is located may be preferentially switched to a channel in another filtering range (for example, the filtering range of the high-pass filter), to ensure that channel transmission of the Wi-Fi connection between the electronic device 100 and the wireless access device is not interfered, reduce a data transmission delay over the Wi-Fi connection.

S1306: The electronic device 100 detects whether the WLAN communication module needs to work in the intra-frequency inter-channel mode.

When the electronic device 100 works in the low frequency + high frequency mode of the dual 5 GHz frequency band, the electronic device 100 queries, at an interval of a period of time, whether the device still performs communication on two different channels (whether the device is in the intra-frequency inter-channel mode). If the electronic device 100 still works on two different channels, a current working mode continues, and the process may return to step S1304. If the electronic device 100 uses only one channel to communicate with a plurality of devices, the process returns to step S 1302, and the working mode is changed.

Optionally, in the foregoing embodiment, the electronic device 100 switches the filter of the radio frequency path only when the electronic device 100 determines that the WLAN communication module needs to work in the intra-frequency inter-channel mode. Herein, a determining condition may be further set as follows: When the electronic device 100 and the wireless access device establish a WLAN communication connection on any channel on the 5 GHz frequency band, and the electronic device 100 obtains an instruction for establishing a WLAN direct connection to the electronic device 200, the radio frequency path of the electronic device 100 uses the narrow-band filter, and the working mode is switched to the low frequency + high frequency mode in the dual 5 GHz frequency band.

Optionally, the determining condition may be further set as follows: When the electronic device 100 detects that communication is being performed on two different channels on the 5 GHz frequency band, it is determined that the electronic device 100 needs to change the working mode. To be specific, when the electronic device 100 communicates with the wireless access device on the channel A on the 5 GHz frequency band, the electronic device 100 communicates with the electronic device 200 on the channel B on the 5 GHz frequency band, and the channel A and the channel B are different channels on the 5 GHz frequency band, the radio frequency path of the electronic device 100 uses the narrow-band filter, and the working mode is switched to the low frequency + high frequency mode in the dual 5 GHz frequency band.

The foregoing is an implementation procedure of the WLAN communication method provided in this embodiment of this application. The method uses a feature of a wide Wi-Fi 5 GHz frequency band. A radio frequency path in a 5 GHz high frequency band and a radio frequency path in a 5 GHz low frequency band are configured in a WLAN communication module of the electronic device 100. The radio frequency path in the 5 GHz high frequency band may include a high-frequency filter (for example, a filter whose filtering range is 5.49 GHz to 5.835 GHz) of the 5 GHz frequency band, and the radio frequency path in the 5 GHz low frequency band may include a low-frequency filter (for example, a filter whose filtering range is 5.17 GHz to 5.33 GHz) of the 5 GHz frequency band. When the electronic device 100 needs to establish two WLAN connections, the electronic device 100 may transmit and receive data through the radio frequency path in the 5 GHz high frequency band in one WLAN connection, and transmit and receive data through the radio frequency path in the 5 GHz low frequency band in the other WLAN connection. In this way, concurrency of dual radio frequency paths in 5 GHz frequency bands can be implemented, a data transmission delay can be reduced, and communication quality can be improved.

The following describes a structure of another radio frequency path provided in embodiments of this application.

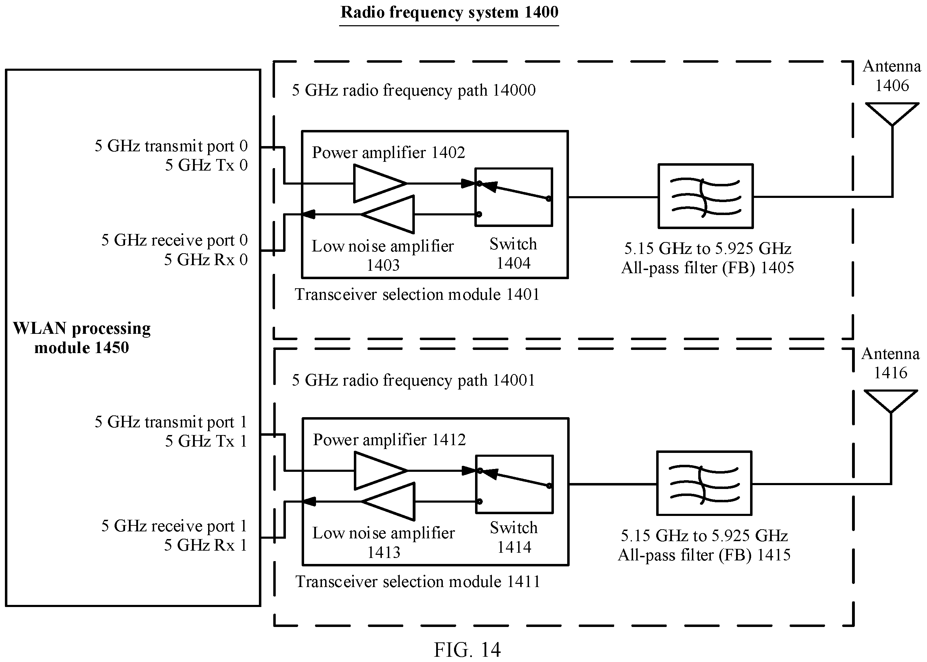

FIG. 14 is a schematic diagram of a structure of a radio frequency path according to an embodiment of this application.

As shown in FIG. 14, a radio frequency system 1400 may include but is not limited to two radio frequency paths: a 5 GHz radio frequency path 14000 and a 5 GHz radio frequency path 14001. Each radio frequency path includes a transceiver selection module and a filter. The transceiver selection module may adjust, based on a control signal of the WLAN processing module, the radio frequency path to be in a transmit state or a receive state. The WLAN processing module 1450, the radio frequency path, a Wi-Fi driver, all Wi-Fi protocols, and the like may form a WLAN communication module.

When the radio frequency path works in the transmit state, a digital signal output by a TX signal processing unit of the WLAN processing module is converted into a low-frequency analog signal through digital-to-analog conversion, and then the low-frequency analog signal is modulated onto a carrier by using a frequency mixer. A carrier signal is generated by a phase locked loop. A modulated high-frequency signal is amplified by a power amplifier, and then transmitted through the antenna. When the radio frequency path works in the receive state, the high-frequency signal received by the antenna is amplified by a low noise amplifier, and then down-converted into a low-frequency analog signal by using the frequency mixer. Through analog-to-digital conversion, the low-frequency analog signal is converted into a digital signal, and then transmitted to an RX signal processing unit for signal receiving processing.

The 5 GHz radio frequency path 14000 may include a transceiver selection module 1401 and an all-pass filter 1405.

The transceiver selection module 1401 includes accessories related to transmitting and receiving. For example, the transceiver selection module 1401 may include a radio frequency power amplifier 1402, a low noise amplifier 1403, and a switch 1404. The radio frequency power amplifier 1402 may obtain sufficiently large radio frequency output power. The low noise amplifier 1403 may be used as a high-frequency or intermediate-frequency preamplifier of various radio receivers, and an amplification circuit of a high-sensitivity electronic detection device. The switch 1404 may be a single-pole double-throw switch, and may be configured to switch a working state (including the transmit state and the receive state) of the radio frequency path. The switch 1104 may be controlled by the WLAN processing module 1450, or controlled by an application processor.

The all-pass filter 1405 is a filter that may enable a signal at a useful frequency to pass through, and suppress a signal at a useless frequency at the same time, for example, may enable a signal in a frequency range of 5.15 GHz to 5.925 GHz to pass through, and filter out a signal at another frequency.

The 5 GHz radio frequency path 14001 includes a transceiver selection module 1411 and an all-pass filter 1415. For detailed descriptions, refer to the 5 GHz radio frequency path 14000.

An antenna 1406 and an antenna 1416 are configured to transmit and receive an electromagnetic wave signal.

For the radio frequency system 1400 herein, refer to the radio frequency system 600 shown in FIG. 6A. For the radio frequency system 1400, refer to the radio frequency system 1100 shown in FIG. 11. As long as the switch 1105, the switch 1108, the switch 1115, and the switch 1118 of the radio frequency system 1100 are all switched downwards, the radio frequency system 1100 may be used as a circuit of the radio frequency system 1400.

The following describes a timing control method applied to Wi-Fi dual 5 GHz provided in an embodiment of this application.

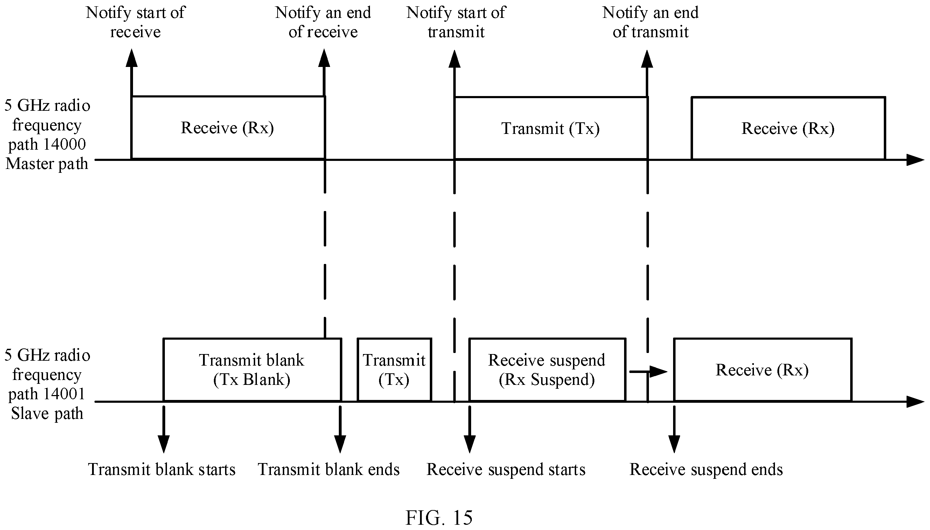

FIG. 15 shows an operating principle of the radio frequency system 1400.

In actual application, because both 5 GHz radio frequency paths receive and transmit a signal of the 5 GHz frequency band, if one path performs receiving and the other path performs transmitting, the electronic device receives a signal sent by the electronic device, causing interference. This phenomenon may be referred to as mutual wrapping. For a problem of mutual wrapping of two radio frequency paths, this application proposes a solution: Time for performing transmit and receive operations on the two paths is configured, that is, avoidance is performed on transmit and receive operations on one path for the other path, so that mutual wrapping can be avoided. For details, refer to Table 1.

**Table 1**

| State configuration | Radio frequency path 14000 is in a transmit state | Radio frequency channel 140000 is in a receive state | Radio frequency path 140000 is in an idle state |
|---|---|---|---|
| Radio frequency path 14001 is in a transmit state | No | Yes | No |
| Radio frequency channel 14001 is in a receive state | Yes | No | No |
| Radio frequency path 14001 is in an idle state | No | No | No |

Table 1 is a table of whether mutual wrapping occurs when two radio frequency paths are in different states (a receive state, a transmit state, or an idle state). It can be learned from Table 1 that when the radio frequency path 14000 is in the transmit state and the radio frequency path 14001 is in the receive state, or when the radio frequency path 14000 is in the receive state and the radio frequency path 14001 is in the transmit state, mutual wrapping inevitably occurs. An embodiment of this application provides a WLAN communication method. When mutual wrapping occurs, only one path is left to work, and the other path is set to idle, as shown in the first two rows of the last column in Table 1, to avoid mutual wrapping of the radio frequency paths.

In the solutions of this application, one radio frequency path may be used as a master path, and the other radio frequency path may be used as a slave path. A method for selecting the master path may be selecting a radio frequency path used by a task with a higher priority or another similar setting method. A transmit operation of the slave path avoids a receive operation of the master path, and a receive operation of the slave path avoids a transmit operation of the master path. In this embodiment of this application, a communication delay of the master path is reduced by performing an avoidance operation on the slave path.

FIG. 15 shows a WLAN communication method according to an embodiment of this application. The electronic device 100 sets the radio frequency path 14000 as the master path, and sets the radio frequency path 14001 as the slave path. When a task of the radio frequency path 14000 (master path) conflicts with a task of the radio frequency path 14001 (slave path), the radio frequency path 14001 (slave path) performs avoidance.

When receiving a signal, the master path reports to the application processor or the WLAN communication module, to notify the application processor or the WLAN communication module that the master path receives the signal. If the electronic device 100 detects that the slave path has a requirement for transmitting a signal, the electronic device 100 indicates the slave path to stop transmitting a signal in a time window for the master path to receive a signal until signal receiving in the master path ends, and sends a notification 1 to the electronic device 100. The notification 1 indicates that signal receiving in the master path ends. In response to the notification 1, the electronic device 100 may unblock the slave path and indicate the slave path to start to transmit a signal. An operation that the slave path is forced to be idle may be referred to as a transmit blank (transmit blank, Tx Blank) mechanism.

When transmitting a signal, the master path reports to the application processor or the WLAN communication module, to notify the application processor or the WLAN communication module that the master path transmits a signal. If the electronic device 100 detects that the slave path has a requirement for receiving a signal, the electronic device 100 indicates the slave path to stop receiving a signal in a time window for the master path to transmit a signal until signal transmission in the master path ends, and sends a notification 2 to the electronic device 100. The notification 2 indicates that signal transmission in the master path ends. In response to the notification 2, the electronic device 100 may unblock the slave path and indicate the slave path to start to receive a signal. An operation that the slave path is forced to be idle may be referred to as a receive suspend (receive suspend, Rx Suspend) mechanism.

If the master path is in the transmit state, the transmit operation of the slave path is not affected. If the master path is in the receives state, the receive operation of the slave path is not affected.

The following describes a WLAN communication method provided in embodiments of this application.

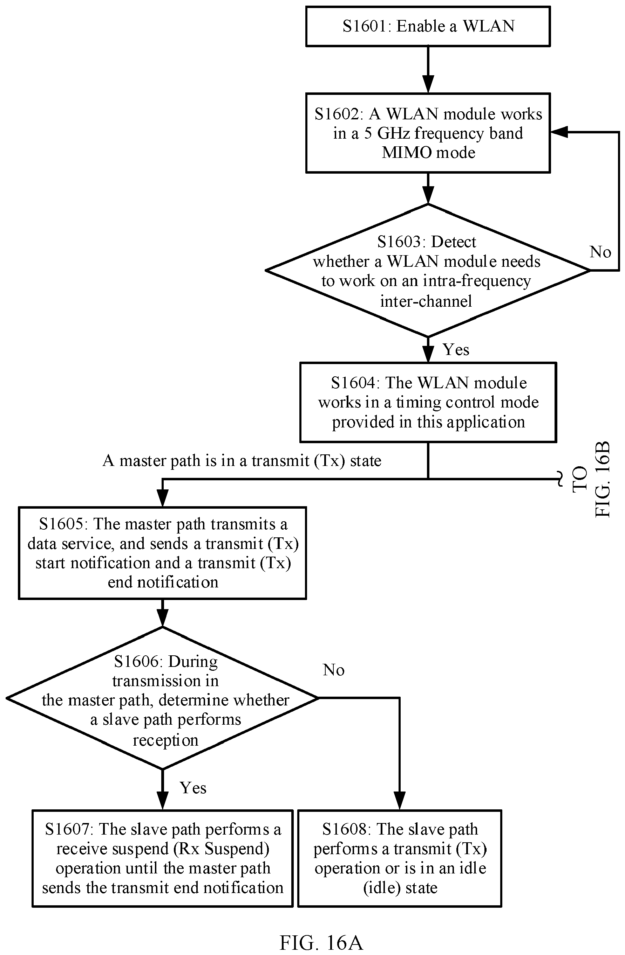

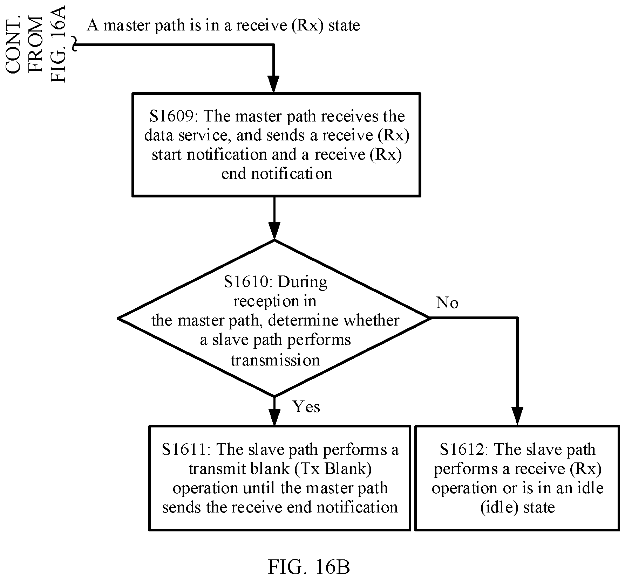

FIG. 16A and FIG. 16B show a WLAN communication method according to an embodiment of this application. The method may be applied to a communication system including the electronic device 100. In this embodiment of this application, a radio frequency system of the electronic device 100 may be the radio frequency system 1400 shown in FIG. 14.

As shown in FIG. 16A and FIG. 16B, the method includes the following steps.

S1601: Enable a WLAN communication module.

That the electronic device 100 enables a WLAN function and establishes a WLAN connection to another electronic device may mean that the electronic device 100 establishes a WLAN connection to a wireless access device (for example, the wireless access device 300), or establishes a P2P connection to a GO device (for example, the electronic device 200).

S1602: The WLAN communication module works in a 5 GHz frequency band multiple-input multiple-output (multiple-input multiple-output, MIMO) mode.

The electronic device 100 controls both two 5 GHz radio frequency paths (for example, the radio frequency paths of the radio frequency system 1400 shown in FIG. 14) to use a full band filter. In this case, the electronic device 100 works normally, and the electronic device 100 controls the two paths to simultaneously receive signals or simultaneously transmit signals.

S1603: The electronic device 100 detects whether the WLAN communication module needs to work on in intra-frequency inter-channel mode.

In this embodiment of this application, a timing control mode is a timing control method in which the electronic device 100 uses the method shown in FIG. 15 to set the 5 GHz radio frequency path 14000 as a master path and the 5 GHz radio frequency path 14001 as a slave path, and the electronic device 100 uses transmit blank and receive suspend, to resolve a mutual wrapping problem.

To determine whether the electronic device needs to work in the intra-frequency inter-channel mode, in this embodiment of this application, the following two cases are listed. When the electronic device 100 encounters the following cases, the electronic device 100 needs to work in the intra-frequency inter-channel mode, and the timing control mode is used. Details are as follows.

Case 1: When a channel for communication between the electronic device 100 and the wireless access device is a preset channel (including a radar channel and an indoor channel), it is determined that the electronic device 100 is to work in the intra-frequency inter-channel mode, and needs to work in the intra-frequency inter-channel mode, provided that the electronic device 100 detects a WLAN direct connection operation.

Case 2: When a channel for communication between the electronic device 100 and the wireless access device is a general channel, even if the electronic device 100 is to establish a WLAN direct connection, it cannot be determined that the electronic device 100 is to work in the intra-frequency inter-channel mode. In this case, only when the electronic device 100 has established the P2P connection to the GO device, and a channel for communication between the electronic device 100 and the GO device is different from a channel for communication between the electronic device 100 and the wireless access device, it can be determined that the electronic device 100 needs to use the timing control mode. In other words, when detecting that communication is being performed through two different channels, the electronic device 100 determines that the WLAN communication module needs to work in the intra-frequency inter-channel mode.

When either of the foregoing two cases is met, step S 1604 is performed. If neither of the foregoing two cases is met, the working mode is not changed, and the process returns to step S1602. In the scenario, a switching requirement may be detected by using an application processor, or may be detected by using a WLAN processing module.

S1604: The WLAN communication module of the electronic device 100 works in the timing control mode.

When a determining result in step S1603 is "yes", the WLAN communication module of the electronic device 100 stops working in the MIMO mode, and switches to the timing control mode. The electronic device 100 sets one radio frequency path as the master path, sets the other radio frequency path as the slave path, and enables an avoidance mechanism (for example, in the radio frequency system 1400 shown in FIG. 14, the 5 GHz radio frequency path 14000 is set as the master path, and the 5 GHz radio frequency path 14001 is set as the slave path).

When the master path is in a transmit (Tx) state, the electronic device 100 performs step S1605 and subsequent steps of S1605. When the master path is in a receive (Rx) state, the electronic device 100 performs step S1609 and subsequent steps of S1609.

The following lists related steps S1605 to S1608 in which the master path is in the transmit state.

S1605: The master path transmits a data service.

When starting to transmit a signal, the master path sends a Tx start notification. After signal transmission ends, the master path sends a Tx end notification. In response to the foregoing notification, the electronic device 100 detects a status of the slave path in real time during transmission in the master path.

S1606: During transmission in the master path, the electronic device 100 determines whether the slave path performs reception (Rx).

After receiving the notification indicating that Tx starts in the master path, the electronic device 100 detects whether the slave path has an Rx requirement. If the slave path has the Rx requirement, step S 1607 is performed. If the slave path does not have the Rx requirement, step S1608 is performed.

S1607: The slave path performs a receive suspend (Rx Suspend) operation.

The electronic device 100 detects that the slave path has the Rx requirement, and sends a receive suspend instruction to the slave path to prevent self-transmitting and self-receiving. The electronic device 100 controls the slave path to perform the Rx Suspend operation.

After the master path completes transmission, the master path sends the Tx end notification. The electronic device 100 receives the notification, which indicates the slave path to perform an Rx operation.

S1608: The slave path performs a transmit (Tx) operation or is not in an idle (idle) state.

The electronic device 100 does not receive the Tx start notification of the master path, and normally performs the receive operation of the slave path. Alternatively, the slave path performs no operation and is in the idle state.

The following lists related steps S1609 to S1612 in which the master path is in the receive state.

S1609: The master path receives the data service.

When starting to receive a signal, the master path sends an Rx start notification. After finishing receiving the signal, the master path sends an Rx end notification. In response to the foregoing notification, the electronic device 100 detects the status of the slave path in real time during reception in the master path.

S1610: During reception in the master path, the electronic device determines whether the slave path performs transmission (Tx).

After receiving the notification indicating that Rx starts in the master path, the electronic device 100 detects whether the slave path has a Tx requirement. If the slave path has the Tx requirement, step S 111 is performed. If the slave path does not have the Tx requirement, step S1612 is performed.

S1611: The slave path performs a Tx Blank (Tx Blank) operation.

The electronic device 100 detects that the slave path has the Tx requirement, and sends a transmit suspend instruction to the slave path to prevent self-transmitting and self-receiving. The electronic device 100 controls the slave path to perform the Tx Blank operation.

After the master path completes reception, the master path sends the RX end notification. The electronic device 100 receives the notification, which indicates the slave path to perform the Tx operation.

S1612: The slave path performs the receive (Rx) operation or is in the idle (idle) state.

The electronic device 100 does not receive the Rx start notification of the master path, and normally performs the transmit operation of the slave path. Alternatively, the slave path performs no operation and is in the idle state.

Optionally, in the foregoing embodiment, the electronic device 100 switches the working mode to the timing control mode only when the electronic device 100 determines that the WLAN communication module needs to work in the intra-frequency inter-channel mode. Herein, the determining condition may be further set as follows: When the electronic device 100 and the wireless access device establish a WLAN communication connection on any channel on the 5 GHz frequency band, and the electronic device 100 obtains an instruction for establishing a WLAN direct connection to the electronic device 200, the electronic device 100 switches the working mode to the timing control mode.

Optionally, the determining condition may be further set as follows: When the electronic device 100 detects that communication is being performed on two different channels on the 5 GHz frequency band, it is determined that the electronic device 100 needs to change the working mode. To be specific, when the electronic device 100 communicates with the wireless access device on the channel A on the 5 GHz frequency band, the electronic device 100 communicates with the electronic device 200 on the channel B on the 5 GHz frequency band, and the channel A and the channel B are different channels on the 5 GHz frequency band, the electronic device 100 switches the working mode to the timing control mode.

The following lists service scenarios that may occur in different working modes of the electronic device 100, and a duty cycle of a transmit operation performed by the electronic device 100 in these service scenarios that may occur. The duty cycle may be a ratio of an operation execution time to a total time per unit time.

**Table 2**

| Working mode | Networking scenario | Service Scenario | Tx duty cycle |
|---|---|---|---|
| Functioning as a STA device | Establishing a WLAN connection to a wireless access device | Web page browsing | 1.48% |
| | | File download | 7.15% |
| | | Real-time network call | 2.06% |
| Functioning as a GC Device | Establishing a WLAN direct connection to a GO Device | File transfer | 16.13% |
| | | Miracast | 10.88% |
| Functioning as a wireless access device | Not establishing a WLAN connection to a STA device | Hotspot standby | 0.59% |
| | Establishing a WLAN connection to a STA device | Web page browsing | 10.88% |
| | | File download | 10.88% |

The data shown in Table 2 is merely an example, and is obtained through random sampling. As a factor such as a sampling environment changes, the obtained data is also different. As shown in the foregoing table, when the electronic device 100 is in different working modes, and establishes a WLAN connection, a P2P connection, or another connection to different electronic devices, a duty cycle of a transmission signal of the electronic device 100 does not exceed 20%. The electronic device 100 controls the slave path to perform the transmit blank operation during this period, which has little impact on a transmit service of the slave path. The slave path does not lose excessive performance because of avoiding the receive operation of the master path, and can further reduce a communication delay on the master path of the electronic device 100, to improve communication quality of an important task.

Therefore, optionally, in this embodiment of this application, not only the implementation in FIG. 16A and FIG. 16B (the electronic device 100 controls the slave path to use the transmit blank mechanism and the receive suspend mechanism) may be used, but also the electronic device 100 may indicate the slave path to perform only the receive suspend operation. As shown in Table 2, a transmit duty cycle of the slave path does not exceed 20%, and impact of the transmit operation of the slave path on the master path is small, and can be ignored. The electronic device 100 indicates the slave path to use only the receive suspend mechanism.

Optionally, when the electronic device 100 controls the slave path to be idle (for example, the slave path is responsible for transmitting and receiving a signal when browsing a web page, and when the web page is loaded and the slave path performs no other operations, it may be considered that the slave path is idle), the electronic device 100 controls the slave path to switch to a channel for communication in the master path. In other words, the electronic device 100 may indicate the slave path to receive or transmit a signal of the master path. The electronic device 100 may superimpose signals of the master path and the slave path, to reduce a possibility of signal loss. The electronic device 100 controls the slave path to use the transmit blank mechanism and the receive suspend mechanism when the slave path works (the working herein is working on a channel of a WLAN communication connection).

Optionally, when the electronic device 100 controls the slave path to be idle (no signal is transmitted or received on the channel of the slave path), the electronic device 100 controls the slave path to switch to the channel for communication in the master path. In other words, the electronic device 100 may indicate the slave path to receive or transmit a signal of the master path. The electronic device 100 may superimpose signals of the master path and the slave path, to reduce a possibility of signal loss. The electronic device 100 controls the slave path to use only the receive suspend mechanism when the slave path works (the working herein is working on a channel of a WLAN communication connection).

For example, in a projection scenario, as shown in FIG. 7B, the electronic device 100 establishes the WLAN communication connection to the wireless access device 300, and the electronic device 100 communicates with the wireless access device 300 through the channel A on the 5 GHz frequency band. The electronic device 100 establishes the WLAN direct connection to the electronic device 200, and the electronic device 100 communicates with the electronic device 200 through the channel B on the 5 GHz frequency band. The channel A and the channel B are different channels on the 5 GHz frequency band. If the electronic device 100 needs to work in the intra-frequency inter-channel mode, the electronic device 100 switches the working mode to the timing control mode. To ensure communication quality of the WLAN direct connection, the master path is responsible for signal receiving and transmitting over the WLAN direct connection, and the slave path is responsible for signal receiving and transmitting through WLAN communication.

In this scenario, the electronic device 100 may control the slave path to perform the following several operations. (1) The electronic device 100 may control the slave path to use both the transmit blank mechanism and the receive suspend mechanism, to avoid the master path. (2) The electronic device 100 may control the slave path to use only the receive suspend mechanism, and send a signal when the slave path needs to send a signal, without avoiding the receive operation of the master path. (3) The electronic device 100 may control the slave path to switch to the channel B when communication between the electronic device 100 and the wireless access device 300 is idle (no signal is transmitted or received), and transmit and receive a signal of the WLAN direct connection like the master path. The electronic device 100 may control the slave path to use the transmit blank mechanism and the receive suspend mechanism when the electronic device 100 communicates with the wireless access device 300 (a signal is transmitted or received). (4) The electronic device 100 may control the slave path to switch to the channel B when communication between the electronic device 100 and the wireless access device 300 is idle (no signal is transmitted or received), and transmit and receive a signal of the WLAN direct connection like the master path. The electronic device 100 may control the slave path to use only the receive suspend mechanism when the electronic device 100 communicates with the wireless access device 300 (a signal is transmitted or received). The electronic device 100 may control the slave path to perform any one of the four operations. This is not limited herein.

The foregoing steps describe in detail an application procedure of the timing control mode in this embodiment of this application. In the timing control mode, when the low frequency + high frequency mode of the dual 5 GHz frequency band is not used, a delay when the electronic device 100 works in the intra-frequency inter-channel mode can also be reduced.

In conclusion, the foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent substitutions to some technical features thereof, without departing from the scope of the technical solutions of embodiments of this application.

## Claims

1. An electronic device, wherein the electronic device is a first electronic device, and comprises a processor, a first radio frequency path, a second radio frequency path, a first antenna, and a second antenna, wherein the first radio frequency path comprises a first all-pass filter of a wireless fidelity Wi-Fi 5 GHz frequency band and a low-pass filter of the Wi-Fi 5 GHz frequency band, and the second radio frequency path comprises a second all-pass filter of the wireless fidelity 5 GHz frequency band and a high-pass filter of the Wi-Fi 5 GHz frequency band;
the processor is configured to: control the first radio frequency path to filter, by using the first all-pass filter, a signal received by the first antenna or a signal to be sent by the first antenna, and control the second radio frequency path to filter, by using the second all-pass filter, a signal received by the second antenna or a signal to be sent by the second antenna; and
the processor is further configured to: when detecting that the first electronic device meets a preset condition, control the first radio frequency path to filter, by using the low-pass filter, the signal received by the first antenna or the signal to be sent by the first antenna, and control the second radio frequency path to filter, by using the high-pass filter, the signal received by the second antenna or the signal to be sent by the second antenna.

2. The electronic device according to claim 1, wherein the preset condition comprises:
the first electronic device establishes a Wi-Fi connection to a wireless access device through a first channel on the Wi-Fi 5 GHz frequency band, and the first electronic device establishes a Wi-Fi direct connection to a second electronic device through a second channel on the Wi-Fi 5 GHz frequency band.

3. The electronic device according to claim 2, wherein the processor is specifically configured to:
when a frequency of the second channel falls within a filtering frequency range of the low-pass filter, control the first radio frequency path to filter, by using the low-pass filter, a signal received by the first antenna on the second channel or a signal to be sent by the first antenna on the second channel.

4. The electronic device according to claim 3, wherein the processor is further configured to:
when a frequency of the first channel falls within a filtering range of the low-pass filter, control a channel on which the Wi-Fi connection between the first electronic device and the wireless access device is located to be switched from the first channel to a third channel on the Wi-Fi 5 GHz frequency band, wherein a frequency of the third channel falls within a filtering range of the high-pass filter; and
the processor is specifically configured to:
control the second radio frequency path to filter, by using the high-pass filter, a signal received by the second antenna on the third channel or a signal to be sent by the second antenna on the third channel.

5. The electronic device according to claim 3, wherein the processor is specifically configured to:
when a frequency of the first channel falls within a filtering range of the high-pass filter, control the second radio frequency path to filter, by using the high-pass filter, a signal received by the second antenna on the first channel or a signal to be sent by the second antenna on the first channel.

6. The electronic device according to claim 2, wherein the processor is specifically configured to:
when a frequency of the second channel falls within a filtering frequency range of the high-pass filter, control the second radio frequency path to filter, by using the high-pass filter, a signal received by the second antenna on the second channel or a signal to be sent by the second antenna on the second channel.

7. The electronic device according to claim 6, wherein the processor is further configured to:
when a frequency of the first channel falls within a filtering range of the high-pass filter, control a channel on which the Wi-Fi connection between the first electronic device and the wireless access device is located to be switched from the first channel to a fourth channel on the Wi-Fi 5 GHz frequency band, wherein a frequency of the fourth channel falls within a filtering range of the low-pass filter; and
the processor is specifically configured to:
control the first radio frequency path to filter, by using the low-pass filter, a signal received by the first antenna on the fourth channel or a signal to be sent by the first antenna on the fourth channel.

8. The electronic device according to claim 6, wherein the processor is specifically configured to:
when a frequency of the first channel falls within a filtering range of the low-pass filter, control the first radio frequency path to filter, by using the low-pass filter, a signal received by the first antenna on the first channel or a signal to be sent by the first antenna on the first channel.

9. The electronic device according to claim 1, wherein the preset condition comprises:
the first electronic device establishes a Wi-Fi connection to a wireless access device through a first channel on the Wi-Fi 5 GHz frequency band, and the first electronic device receives a first operation of projection to a second electronic device; and
the processor is specifically configured to:
when a frequency of the first channel falls within a filtering frequency range of the low-pass filter, in response to the first operation, control the first electronic device to establish a Wi-Fi direct connection to the second electronic device through a second channel on the Wi-Fi 5 GHz frequency band, wherein a frequency of the second channel falls within a filtering frequency range of the high-pass filter; and
control the first radio frequency path to filter, by using the low-pass filter, a signal received by the first antenna on the first channel or a signal to be sent by the first antenna on the first channel, and control the second radio frequency path to filter, by using the high-pass filter, a signal received by the second antenna on the second channel or a signal to be sent by the second antenna on the second channel.

10. The electronic device according to claim 9, wherein the processor is further configured to:
when the frequency of the first channel falls within the filtering frequency range of the high-pass filter, in response to the first operation, control the first electronic device to establish the Wi-Fi direct connection to the second electronic device through the second channel on the Wi-Fi 5 GHz frequency band, wherein the frequency of the second channel falls within the filtering frequency range of the low-pass filter; and
control the second radio frequency path to filter, by using the high-pass filter, a signal received by the second antenna on the first channel or a signal to be sent by the second antenna on the first channel, and control the first radio frequency path to filter, by using the low-pass filter, a signal received by the first antenna on the second channel or a signal to be sent by the first antenna on the second channel.

11. The electronic device according to claim 1, wherein the preset condition comprises:
the first electronic device establishes a Wi-Fi direct connection to a second electronic device through a second channel on the Wi-Fi 5 GHz frequency band, and the first electronic device receives a second operation of establishing a Wi-Fi connection to a wireless access device; and
the processor is specifically configured to:
when a frequency of the second channel falls within a filtering frequency range of the low-pass filter, in response to the second operation, control the first electronic device to establish the Wi-Fi connection to the wireless access device through a first channel on the Wi-Fi 5 GHz frequency band, wherein a frequency of the first channel falls within a filtering frequency range of the high-pass filter; and
control the first radio frequency path to filter, by using the low-pass filter, a signal received by the first antenna on the second channel or a signal to be sent by the first antenna on the second channel, and control the second radio frequency path to filter, by using the high-pass filter, a signal received by the second antenna on the first channel or a signal to be sent by the second antenna on the first channel.

12. The electronic device according to claim 11, wherein the processor is further configured to:
when the frequency of the second channel falls within the filtering frequency range of the high-pass filter, in response to the second operation, control the first electronic device to establish the Wi-Fi connection to the wireless access device through the first channel on the Wi-Fi 5 GHz frequency band, wherein the frequency of the first channel falls within the filtering frequency range of the low-pass filter; and
control the first radio frequency path to filter, by using the low-pass filter, a signal received by the first antenna on the first channel or a signal to be sent by the first antenna on the first channel, and control the second radio frequency path to filter, by using the high-pass filter, a signal received by the second antenna on the second channel or a signal to be sent by the second antenna on the second channel.

13. A WLAN communication method, comprising:
controlling, by a first electronic device, a first radio frequency path to filter, by using a first all-pass filter of a Wi-Fi 5 GHz frequency band, a signal received by a first antenna or a signal to be sent by a first antenna, and controlling a second radio frequency path to filter, by using a second all-pass filter of the Wi-Fi 5 GHz frequency band, a signal received by a second antenna or a signal to be sent by a second antenna, wherein
the first radio frequency path comprises the first all-pass filter and a low-pass filter of the Wi-Fi 5GHz frequency band, and the second radio frequency path comprises the second all-pass filter and a high-pass filter of the Wi-Fi 5 GHz frequency band; and
when detecting that the first electronic device meets a preset condition, controlling, by the first electronic device, the first radio frequency path to filter, by using the low-pass filter, the signal received by the first antenna or the signal to be sent by the first antenna, and controlling the second radio frequency path to filter, by using the high-pass filter, the signal received by the second antenna or the signal to be sent by the second antenna.

14. The method according to claim 13, wherein the preset condition comprises:
the first electronic device establishes a Wi-Fi connection to a wireless access device through a first channel on the Wi-Fi 5 GHz frequency band, and the first electronic device establishes a Wi-Fi direct connection to a second electronic device through a second channel on the Wi-Fi 5 GHz frequency band.

15. The method according to claim 14, wherein the controlling, by the first electronic device, the first radio frequency path to filter, by using the low-pass filter, the signal received by the first antenna or the signal to be sent by the first antenna specifically comprises:
when a frequency of the second channel falls within a filtering frequency range of the low-pass filter, controlling, by the first electronic device, the first radio frequency path to filter, by using the low-pass filter, a signal received by the first antenna on the second channel or a signal to be sent by the first antenna on the second channel.

16. The method according to claim 15, wherein the method further comprises:
when a frequency of the first channel falls within a filtering range of the low-pass filter, controlling, by the first electronic device, a channel on which the Wi-Fi connection between the first electronic device and the wireless access device is located to be switched from the first channel to a third channel on the Wi-Fi 5 GHz frequency band, wherein a frequency of the third channel falls within a filtering range of the high-pass filter; and
the controlling, by the first electronic device, the second radio frequency path to filter, by using the high-pass filter, the signal received by the second antenna or the signal to be sent by the second antenna specifically comprises:
controlling, by the first electronic device, the first radio frequency path to filter, by using the low-pass filter, a signal received by the first antenna on the third channel or a signal to be sent by the first antenna on the third channel.

17. The method according to claim 15, wherein the method further comprises:
when a frequency of the first channel falls within a filtering range of the high-pass filter, controlling, by the first electronic device, the second radio frequency path to filter, by using the high-pass filter, a signal received by the second antenna on the first channel or a signal to be sent by the second antenna on the first channel.

18. The method according to claim 14, wherein the controlling, by the first electronic device, the second radio frequency path to filter, by using the high-pass filter, the signal received by the second antenna or the signal to be sent by the second antenna specifically comprises:
when a frequency of the second channel falls within a filtering frequency range of the high-pass filter, controlling, by the first electronic device, the second radio frequency path to filter, by using the high-pass filter, a signal received by the second antenna on the second channel or a signal to be sent by the second antenna on the second channel.

19. The method according to claim 18, wherein the method further comprises:
when a frequency of the first channel falls within a filtering range of the high-pass filter, controlling, by the first electronic device, a channel on which the Wi-Fi connection between the first electronic device and the wireless access device is located to be switched from the first channel to a fourth channel on the Wi-Fi 5 GHz frequency band, wherein a frequency of the fourth channel falls within a filtering range of the low-pass filter; and
the controlling, by the first electronic device, the first radio frequency path to filter, by using the low-pass filter, the signal received by the first antenna or the signal to be sent by the first antenna specifically comprises:
controlling, by the first electronic device, the first radio frequency path to filter, by using the low-pass filter, a signal received by the first antenna on the fourth channel or a signal to be sent by the first antenna on the fourth channel.

20. The method according to claim 18, wherein the controlling, by the first electronic device, the first radio frequency path to filter, by using the low-pass filter, the signal received by the first antenna or the signal to be sent by the first antenna specifically comprises:
when a frequency of the first channel falls within a filtering range of the low-pass filter, controlling, by the first electronic device, the first radio frequency path to filter, by using the low-pass filter, a signal received by the first antenna on the first channel or a signal to be sent by the first antenna on the first channel.

21. The method according to claim 13, wherein the preset condition comprises:
the first electronic device establishes a Wi-Fi connection to a wireless access device through a first channel on the Wi-Fi 5 GHz frequency band, and the first electronic device receives a first operation of projection to a second electronic device; and
the controlling, by the first electronic device, the first radio frequency path to filter, by using the low-pass filter, the signal received by the first antenna or the signal to be sent by the first antenna, and controlling the second radio frequency path to filter, by using the high-pass filter, the signal received by the second antenna or the signal to be sent by the second antenna specifically comprises:
when a frequency of the first channel falls within a filtering frequency range of the low-pass filter, establishing, by the first electronic device in response to the first operation, a Wi-Fi direct connection to the second electronic device through a second channel on the Wi-Fi 5 GHz frequency band, wherein a frequency of the second channel falls within a filtering frequency range of the high-pass filter; and
controlling, by the first electronic device, the first radio frequency path to filter, by using the low-pass filter, a signal received by the first antenna on the first channel or a signal to be sent by the first antenna on the first channel, and controlling the second radio frequency path to filter, by using the high-pass filter, a signal received by the second antenna on the second channel or a signal to be sent by the second antenna on the second channel.

22. The method according to claim 21, wherein the method further comprises:
when the frequency of the first channel falls within the filtering frequency range of the high-pass filter, establishing, by the first electronic device in response to the first operation, the Wi-Fi direct connection to the second electronic device through the second channel on the Wi-Fi 5 GHz frequency band, wherein the frequency of the second channel falls within the filtering frequency range of the low-pass filter; and
controlling, by the first electronic device, the second radio frequency path to filter, by using the high-pass filter, a signal received by the second antenna on the first channel or a signal to be sent by the second antenna on the first channel, and controlling the first radio frequency path to filter, by using the low-pass filter, a signal received by the first antenna on the second channel or a signal to be sent by the first antenna on the second channel.

23. The method according to claim 13, wherein the preset condition comprises:
the first electronic device establishes a Wi-Fi direct connection to a second electronic device through a second channel on the Wi-Fi 5 GHz frequency band, and the first electronic device receives a second operation of establishing a Wi-Fi connection to a wireless access device; and
the controlling, by the first electronic device, the first radio frequency path to filter, by using the low-pass filter, the signal received by the first antenna or the signal to be sent by the first antenna, and controlling the second radio frequency path to filter, by using the high-pass filter, the signal received by the second antenna or the signal to be sent by the second antenna specifically comprises:
when a frequency of the second channel falls within a filtering frequency range of the low-pass filter, establishing, by the first electronic device in response to the second operation, the Wi-Fi connection to the wireless access device through a first channel on the Wi-Fi 5 GHz frequency band, wherein a frequency of the first channel falls within a filtering frequency range of the high-pass filter; and
controlling, by the first electronic device, the first radio frequency path to filter, by using the low-pass filter, a signal received by the first antenna on the second channel or a signal to be sent by the first antenna on the second channel, and controlling the second radio frequency path to filter, by using the high-pass filter, a signal received by the second antenna on the first channel or a signal to be sent by the second antenna on the first channel.

24. The method according to claim 23, wherein the method further comprises:
when the frequency of the second channel falls within the filtering frequency range of the high-pass filter, establishing, by the first electronic device in response to the second operation, the Wi-Fi connection to the wireless access device through the first channel on the Wi-Fi 5 GHz frequency band, wherein the frequency of the first channel falls within the filtering frequency range of the low-pass filter; and
controlling, by the first electronic device, the first radio frequency path to filter, by using the low-pass filter, a signal received by the first antenna on the first channel or a signal to be sent by the first antenna on the first channel, and controlling the second radio frequency path to filter, by using the high-pass filter, a signal received by the second antenna on the second channel or a signal to be sent by the second antenna on the second channel.

25. A computer storage medium, comprising computer instructions, wherein when the computer instructions are run on a first electronic device, the first electronic device is enabled to perform the method according to any one of claims 13 to 24.

26. A computer program product, wherein when the computer program product runs on a first electronic device, the first electronic device is enabled to perform the method according to any one of claims 13 to 24.
